# EUROPEAN PATENT SPECIFICATION

(11) **EP 3 879 432 B1**
(45) Date of publication and mention of the grant of the patent: **01.01.2025**
(21) Application number: 19882676.0
(22) Date of filing: 08.11.2019
(51) Int. Cl.: G06K 7/10, G06K 19/07, G06K 7/00, G07G 1/00

(54) **WIRELESS TAG SYSTEM**
DRAHTLOSES ETIKETTENSYSTEM
SYSTÈME D'ÉTIQUETTE SANS FIL

(30) Priority: 08.11.2018 JP 2018210438; 25.10.2019 JP 2019194512
(43) Date of publication of application: 15.09.2021
(73) Proprietor: DENSO WAVE INCORPORATED, Agui-cho Chita-gun, Aichi 470-2297 (JP)
(72) Inventor: OKAYAMA, Yousuke, Chita-gun, Aichi 470-2297 (JP); KONOSU, Koji, Chita-gun, Aichi 470-2297 (JP); MARUYAMA, Kentarou, Chita-gun, Aichi 470-2297 (JP)
(74) Representative: Kuhnen & Wacker Patent- und Rechtsanwaltsbüro PartG mbB
(86) International application number: PCT/JP2019/043819
(87) International publication number: WO 2020/096034

(56) References cited:
- EP-A2- 1 160 583
- WO-A1-2018/139290
- JP-A- 2007 303 972
- JP-A- 2018 120 367
- JP-A- 2019 125 286
- JP-B2- 5 058 951
- US-A1- 2006 103 533
- US-A1- 2008 018 430

## Description

### [Technical Field]

The present invention relates to a wireless tag system including a wireless communication device whose wireless communication target is a wireless tag present in a predetermined communication area such as a defined space.

### [Background Art]

Wireless tags present (or placed) in a predetermined defined communication area, such as in a box for storing articles, have often been read through wireless communication, and the frequency of reading wireless tags in this way has been increased. When performing reading in this way, there may be produced a range in which radio waves cannot be received (a null range) due to reflection or the like of radio waves, depending on the surrounding environment. In such a situation, if a wireless tag is arranged in this null range, stable communication is not necessarily performed with the wireless tag. This is because the wireless tag present in the null range cannot sufficiently receive transmission waves from the wireless communication device, and thus the electrical power required for operation as a wireless tag cannot be obtained.

As a technique for solving this issue, for example, there is known a tag communication device as disclosed in PTL 1 below. This tag communication device is provided with two antennas, and the phase of radio waves transmitted from each antenna is changed at a predetermined cycle so as not to fix the position of the communication-disabled region (null range) and to thereby prevent RFID tags from being disabled in communication.
Further state of the art is disclosed in the following documents:
PTL 2 (EP 1 160 583 A2) discloses a detection of multiple articles. An identification system comprises an interrogator and a plurality of transponders. The interrogator includes a transmitter which transmits at least two independent interrogation signals to the transponders, and a receiver for receiving response signals from the transponders. The interrogator also includes processor means for identifying the transponders from data in the received response signals. Each transponder comprises receiving means, a code generator, and transmitter means connected to the code generator. On receipt of at least one of the transmitted interrogation signals the transponder transmits a response signal containing data which identifies it. The interrogation signals may be transmitted continuously or intermittently. In a preferred embodiment, the interrogation signals are relatively narrow bandwidth signals at different frequencies. The receiving means of each transponder has a relatively broad reception bandwidth so that the transponder is responsive to one or more of the interrogation signals.
PTL 3 (US 2008/018430 A1) discloses a RFID system and a reader writer. A technology for detecting an RFID by a reader writer and transmitting harmonics for reading and writing the RFID timely without using an object detection sensor is provided. Using a nonlinearity of a rectifier or a demodulator in an IC chip of the RFID, a continuous wave or a modulated wave of two or more different frequencies is output from the reader writer. The RFID receives the continuous wave or the modulated wave of two or more different frequencies and the reader writer receives harmonics intermodulation generated by the rectifier or the demodulator in the IC chip. Therefore, the RFID can be detected without any special object detection sensor, and a modulated wave for reading or writing the RFID can be transmitted.
PTL 4 (US 2006/103533 A1) discloses a radio frequency tag and a reader with asymmetric communication bandwidth. A method and apparatus to overcome fundamental shortcomings in narrow band as well as wide band RFID solutions through offering a hybrid solution that utilizes benefits of narrow band in the downlink direction with the benefits of ultra wide band in the uplink, are disclosed. The invention according to PTL 4 encompasses a multitude of methods, including an approach to increase the ability to capture electromagnetic energy from the reader.
PTL 5 (JP 5 058951 B2) discloses a wireless reading device. The wireless reading device comprises a plurality of reading antennas for reading identification information stored inside the RFID tag stuck to the goods in the basket, a communication antenna which transmits the identification information to a goods sales data processor, and a base body on which the plurality of reading antennas are arranged and the communication antenna is arranged on one side. The reading antennas are arranged on both sides of a virtual line dividing the base body in half.
PTL 6 (WO 2018/139290 A1) discloses a shopping assistance system. Provided is a shopping assistance system comprising a mobile device (bagging device) and an information acquisition device. The mobile device comprises a support part and a guide part. A loading surface is formed on the support part whereupon a product to which an RF tag has been attached is loaded. The guide part comprises a shielded space on the interior thereof which is shielded from radio waves, and is positioned upon the perimeter of the support part along the outer circumference edge of the loading surface. When, within the shielded space, a relative positional relation changes between the RF tag and a communication region which is set around an antenna and at which wireless communication with the RF tag is possible, the information acquisition device uses the antenna to carry out wireless communication with the RF tag and reads in product information from the RF tag.

### [Citation List]

### [Patent Literature]

[PTL 1] JP 2011-193298 A
[PTL 2] EP 1 160 583 A2
[PTL 3] US 2008/018430 A1
[PTL 4] US 2006/103533 A1
[PTL 5] JP 5 058951 B2
[PTL 6] WO 2018/139290 A1

### [Summary of the Invention]

### [Technical Problem]

However, in the configuration in which the phases of the radio waves transmitted from the two antennas are changed at a predetermined cycle as described above, there is an issue of not only increasing the manufacturing cost due to the need of a dedicated transmission circuit or the like, but also limiting the sites of placing the antennas.

The present invention has been made in light of the above issues and aims to provide a configuration capable of realizing stable wireless communication by reliably supplying electrical power according to transmission waves to a wireless tag as a target of wireless communication, while minimizing an increase in manufacturing cost as much as possible and avoiding restrictions on the sites of arranging antennas for use in electrical power supply as much as possible.

### [Solution to Problem]

The claims specify the part of the invention for which, in view of the prior art, protection is sought.

To achieve the above aim, according to an exemplary embodiment, there is provided a wireless tag system (10) according to claim 1.

It should be noted that the bracketed reference signs indicate correspondence to the specific means in the embodiments described later.

### [Advantageous effects of the invention]

In the first exemplary embodiment, the two or more wireless communication devices simultaneously transmit transmission waves on different channels separated from each other by a predetermined frequency or more on a frequency band, when performing wireless communication processing to wirelessly communicate with the wireless tag in the predetermined communication area. Thus, transmission waves from a plurality of wireless communication devices are received by one wireless tag, and the electrical power required for the operation of the wireless tag can be easily obtained. Therefore, electrical power according to the transmission waves can be reliably supplied to the wireless tag as a target of communication, and consequently, stable wireless communication can be achieved.

In an aspect of the disclosure, at least some of the two or more wireless communication devices transmit unmodulated waves as the transmission waves to the wireless tag to supply electrical power. Since unmodulated waves have a higher electrical power density than modulated waves modulated to carry signals, electrical power according to the transmission waves (unmodulated waves) can be more reliably supplied to the wireless tag as a target of communication. Accordingly, even more stable wireless communication can be achieved.

In an aspect of the disclosure, any one of the two or more wireless communication devices supplies a transmission instruction related to transmission of the transmission waves to the rest of the wireless communication devices at every time point of transmitting the transmission waves; and the rest of the wireless communication devices perform the wireless communication processing according to the transmission instruction received. Thus, channels and transmission times of the wireless communication devices can be easily controlled. In particular, there is no need to use higher-level devices that control the wireless communication devices. In addition to that, even if a specific channel becomes unavailable, the wireless communication devices can be controlled so as to avoid that channel.

In an aspect of the disclosure, any one of the two or more wireless communication devices transmits a control table, in which at least channels and transmission times of the transmission waves are time-scheduled, to the rest of the wireless communication devices; and the rest of the wireless communication devices perform wireless communication processing according to the control table received. Thus, channels and transmission times of the wireless communication devices can be easily controlled. In particular, there is no need to use higher-level devices that control the wireless communication devices. In addition, there is no need to communicate with other wireless communication devices every time transmission waves are transmitted. Accordingly, frequency of communication between devices can be reduced.

In an aspect of the disclosure, at least some of the two or more wireless communication devices include a detection unit that detects a transmission status of the transmission waves from the rest of the wireless communication devices, and simultaneously transmit the transmission waves according to detection results derived from the detection unit, for a predetermined period of time or more on a channel different and separated from channels of the rest of the wireless communication devices by a predetermined frequency or more, when performing the wireless communication processing. Thus, channels and transmission times of the wireless communication devices can be easily controlled. In particular, there is no need to use higher-level devices that control the wireless communication devices. In addition to that, there is no need to use a wireless communication device that serves as a master unit for controlling other wireless communication devices. Therefore, even if one of the wireless communication devices fails, disabling transmission of transmission waves, stable wireless communication can be continued.

In an aspect of the disclosure, the system includes a control device that provides a transmission instruction related to transmission of the transmission waves to the two or more wireless communication devices; and the two or more wireless communication devices perform the wireless communication processing according to the transmission instruction received from the control device. Thus, the control device can collectively perform control related to transmission of transmission waves of all the wireless communication devices. In particular, even in a situation where a specific channel cannot be used, the wireless communication devices can be controlled so as to avoid the specific channel in question.

In an aspect of the disclosure, the system includes a control device that transmits a control table, in which at least channels and transmission times of the transmission waves are time-scheduled, to the two or more wireless communication devices; and the two or more wireless communication devices perform the wireless communication processing according to the control table received from the control device. Thus, the control device can collectively perform control related to transmission of transmission waves to all the wireless communication devices. In particular, since there is no need to communicate with the control device every time transmission waves are transmitted, frequency of communication with the control device can be reduced.

In an aspect of the disclosure, there are provided an outer box and an inner box, the outer box disabling passage of radio waves except through an opening, and the inner box being held in the outer box via the opening and enabling passage of radio waves. The predetermined communication area is configured by an internal space defined by the inner box that is held in the outer box. An antenna of the first wireless communication device and an antenna of the second wireless communication device are each arranged between an inner surface of the outer box and an outer surface of the inner box.

Thus, leakage of transmission waves from the outer box (casing) to the outside is minimized, so that electrical power can be reliably supplied to the wireless tag arranged in the internal space of the inner box as a predetermined communication area. In particular, in the vicinity of the inner surface of the outer box, a null region is likely to occur due to reflection of radio waves on the inner surface; however, since the internal space of the inner box held in the outer box serves as a predetermined communication area, the wireless tag in the internal space (predetermined communication area) of the inner box can be away from the vicinity of the inner surface of the outer box. Therefore, electrical power can be reliably supplied to the wireless tag in the internal space of the inner box.

In an aspect of the disclosure, the antenna of the first wireless communication device is arranged between an inner bottom surface of the outer box and an outer surface of the inner box, and the antenna of the second wireless communication device is arranged between any one of the four inner side surfaces and an outer surface of the inner box. Thus, the output direction of the transmission waves transmitted from the antenna of the first wireless communication device becomes substantially orthogonal to the output direction of the transmission waves transmitted from the antenna of the second wireless communication device. Accordingly, electrical power can be reliably supplied to the wireless tag regardless of the orientation of the wireless tag in the internal space of the inner box.

In an aspect of the disclosure, the antenna of the second wireless communication device is arranged being inclined with respect to the inner side surface so that an output direction of the transmission waves is away from the opening. Thus, the transmission waves transmitted from the antenna are less likely to leak from the opening as compared with the case where the antenna of the second wireless communication device is inclined with respect to the inner side surface in a direction in which the output direction of the transmission waves approaches the opening. Accordingly, erroneous reading of a wireless tag located outside the predetermined communication area can be minimized.

In an aspect of the disclosure, four antennas are respectively arranged between inner surfaces of the outer box and outer surfaces of the inner box so that a first antenna of the first wireless communication device faces a first antenna of the second wireless communication device and a second antenna of the first wireless communication device faces a second antenna of the second wireless communication device. The first wireless communication device and the second wireless communication device simultaneously perform the wireless communication processing for a predetermined period of time or more on different channels which separate transmission waves transmitted from the first antenna of the first wireless communication device from transmission waves transmitted from the first antenna of the second wireless communication device by a predetermined frequency or more, or also simultaneously perform the wireless communication processing for a predetermined period of time or more on different channels which separate transmission waves transmitted from the second antenna of the first wireless communication device from transmission waves transmitted from the second antenna of the second wireless communication device by a predetermined frequency or more.

Thus, there can be provided a time when electrical power is supplied to the wireless tag in the internal space of the inner box (in the predetermined communication area) with the transmission waves transmitted from the first antenna of the first wireless communication device and the transmission waves transmitted from the first antenna of the second wireless communication device, and a time when electrical power is supplied to the wireless tag with the transmission waves transmitted from the second antenna of the first wireless communication device and the transmission waves transmitted from the second antenna of the second wireless communication device. In particular, since transmission waves are simultaneously transmitted from both antennas facing each other for a predetermined period of time or more, the radio waves can be easily mutually intensified and electrical power supplied to the wireless tag can be increased. Therefore, even if the radio wave intensity of the transmission waves is lowered for the purpose of minimizing erroneous reading of wireless tags located outside the predetermined communication area, electrical power can be reliably supplied to the wireless tag which is a target of wireless communication, according to the transmission waves.

In an aspect of the disclosure, four antennas are respectively arranged between inner surfaces of the outer box and outer surfaces of the inner box so that a first antenna and a second antenna of the first wireless communication face each other, and a first antenna and a second antenna of the second wireless communication face each other. The first wireless communication device and the second wireless communication device simultaneously perform the wireless communication processing for a predetermined period of time or more on different channels at which separate transmission waves are transmitted from the first antenna of the first wireless communication device and from the first antenna of the second wireless communication device, the different channel being separate from each other by a predetermined channel number (or frequency) or more, or also simultaneously perform the wireless communication processing for a predetermined period of time or more on different channels at which separate transmission waves are transmitted from the second antenna of the first wireless communication device and from the second antenna of the second wireless communication device, the different channel being separate from each other by a predetermined channel number (or frequency) or more.

Thus, there can be provided a time when electrical power is supplied to the wireless tag in the internal space of the inner box (in the predetermined communication area) with the transmission waves transmitted from the first antenna of the first wireless communication device and the transmission waves transmitted from the first antenna of the second wireless communication device, and a time when electrical power is supplied to the wireless tag with the transmission waves transmitted from the second antenna of the first wireless communication device and the transmission waves transmitted from the second antenna of the second wireless communication device. Therefore, even if the radio wave intensity of the transmission waves is lowered for the purpose of minimizing erroneous reading of wireless tags located outside the predetermined communication area, electrical power can be reliably supplied to the wireless tag as a target of wireless communication, according to the transmission waves.

In an aspect of the disclosure, the two or more wireless communication devices include a third wireless communication device in addition to the first wireless communication device and the second wireless communication device. The present wireless tag system includes a reading unit that reads information from the wireless tag in the predetermined communication area as an internal space defined by the inner box, using wireless communication results derived from the first wireless communication device, the second wireless communication device, and the third wireless communication device. An antenna of the third wireless communication device is arranged outside the outer box.

Thus, the wireless tag can read not only by the first wireless communication device and the second wireless communication device but also by the third wireless communication device which can be determined to be a wireless tag having a high probability of being located outside the predetermined communication area. Thus, erroneous reading of wireless tags located outside the predetermined communication area can be minimized.

In an aspect of the disclosure, the antenna of the third wireless communication device is arranged outside the outer box so as to be located around the opening. Thus, the third wireless communication device can easily read the wireless tag located on the surface around the opening which is outside the predetermined communication area, compared to the first wireless communication device and the second wireless communication device. This can minimize erroneous reading due to the first wireless communication device or the second wireless communication device reading the wireless tag located on the surface around the opening.

In an aspect of the disclosure, the antenna of the third wireless communication device is arranged being inclined with respect to a plane provided by the opening so that an output direction of transmission waves is away from the opening. Thus, the third wireless communication device is less likely to read the wireless tag located in the predetermined communication area, minimizing erroneous reading due to the reading performed by the third wireless communication device.

In an aspect of the disclosure, the reading unit reads information from the wireless tag in the predetermined communication area as an internal space defined by the inner box, using received signal strength (RSSI) as a result of wireless communication of the first wireless communication device, the second wireless communication device, and the third wireless communication device. In the first wireless communication device or the second wireless communication device, the received signal strength when reading the wireless tag in the predetermined communication area is higher than the received signal strength when reading the wireless tag outside the predetermined communication area. In the third wireless communication device, the received signal strength when reading a wireless tag outside the predetermined communication area is arranged to be higher than the received signal strength when reading the wireless tag in the predetermined communication area. Therefore, even if wireless tags are read by all the wireless communication devices, the wireless tag whose received signal strength is higher in the first wireless communication device or the second wireless communication device is determined to be a wireless tag in the predetermined communication area, and the wireless tag whose received signal strength is higher in the third wireless communication device is determined to be a wireless tag outside the predetermined communication area. Thus, an accurate determination can be made as to whether the read wireless tag is in the predetermined communication area.

In an aspect of the disclosure, wireless communication of the first wireless communication device and the second wireless communication device, and wireless communication of the third wireless communication device are mutually exclusively performed. Thus, the electric power obtained by the wireless tag according to the transmission waves from the first wireless communication device or the second wireless communication device is not used during wireless communication with the third wireless communication device. Accordingly, since measurement accuracy of the received signal strength obtained during wireless communication of the third wireless communication device is enhanced, a more accurate determination can be made as to whether the read wireless tag is in the predetermined communication area.

### [Brief Description of the Drawings]

Fig. 1 is a schematic diagram illustrating a configuration of a wireless tag system according to a first embodiment.
Fig. 2 is a cross-sectional view illustrating a part of a storage box shown in Fig. 1.
Fig. 3 is a cross-sectional view illustrating a part of the storage box shown in Fig. 1, taken along a plane perpendicular to the cross section shown in Fig. 2.
Fig. 4 is a diagram illustrating the electrical power obtained when a wireless tag receives transmission waves transmitted substantially simultaneously on different channels.
Fig. 5 is a diagram illustrating the electrical power obtained when a wireless tag receives unmodulated waves and modulated waves in a second embodiment.
Fig. 6 is a schematic diagram illustrating a configuration of a wireless tag system according to a third embodiment.
Fig. 7 is a schematic diagram illustrating a configuration of a wireless tag system according to a fifth embodiment.
Fig. 8 is a schematic diagram illustrating a configuration of a wireless tag system according to a sixth embodiment.
Fig. 9 is a plan view illustrating a part of the storage box shown in Fig. 8, as viewed perpendicular to an opening.
Fig. 10 is a schematic diagram illustrating a configuration of a wireless tag system according to a modification of the sixth embodiment.
Fig. 11 is a perspective view illustrating a modification of a storage box.
Fig. 12 is a schematic diagram illustrating a configuration of a wireless tag system according to a seventh embodiment.
Fig. 13 is a plan view illustrating a part of the storage box shown in Fig. 12, as viewed perpendicular to an opening.
Fig. 14 is a schematic diagram illustrating a wireless tag system according to a modification of the seventh embodiment.
Fig. 15 is a schematic flow diagram illustrating a part of an example of transmission control.
Fig. 16 is a schematic flow diagram illustrating a part of another example of transmission control.

### [Description of the Embodiments]

### [First Embodiment]

A first embodiment of a wireless tag system according to the present invention will be described with reference to the drawings.

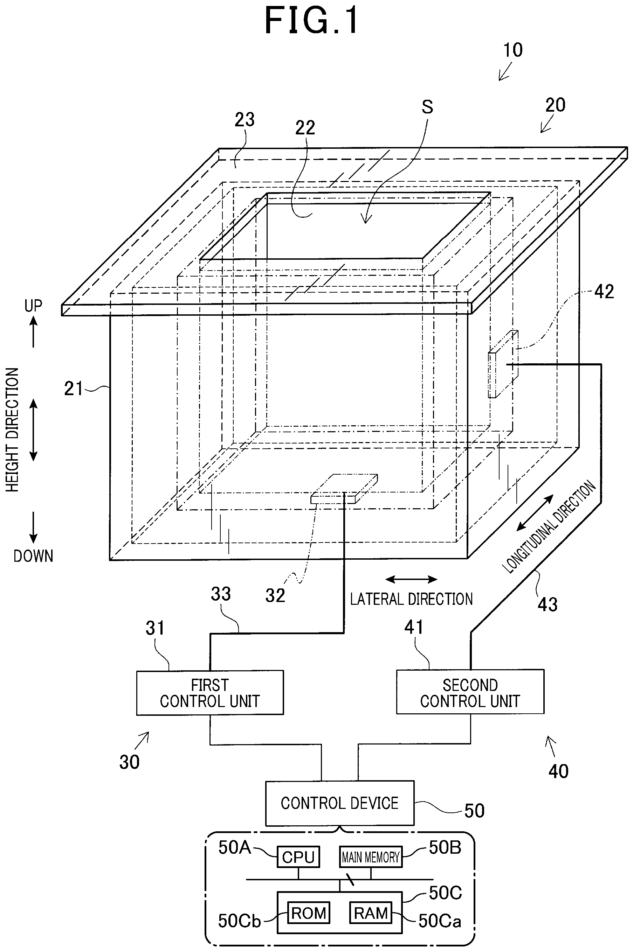

A wireless tag system 10 according to the present embodiment is configured as a system including two or more wireless communication devices having one or two or more wireless tags as targets of wireless communication arranged in a predetermined communication area S defined such as by a box (casing) for storing products. Specifically, as shown in Fig. 1, the wireless tag system 10 includes a storage box (casing) 20 for defining the predetermined communication area S, two wireless communication devices (also termed a first wireless communication device 30 and a second wireless communication device 40 hereinafter), and a control device 50 that manages both wireless communication devices.

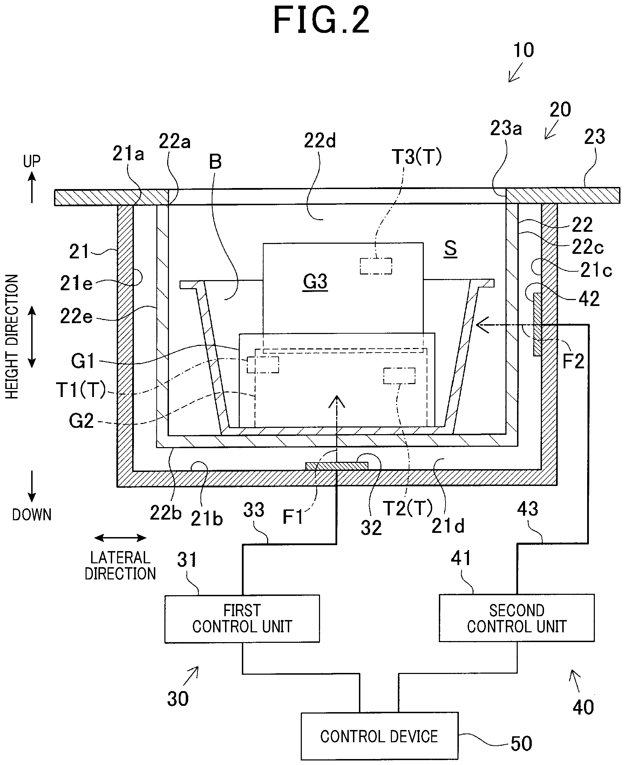

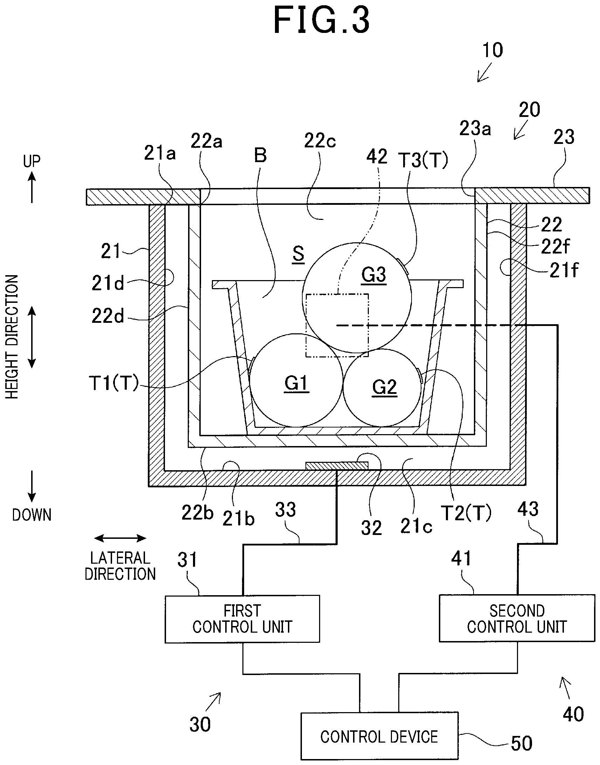

The wireless tag system 10 is arranged in the vicinity of a POS register used for selling products and has a wireless tag (RFID tag) T in the storage box 20 as a target of wireless communication to transmit product information and other information read from the wireless tag T to the POS register and the like through wireless communication. As can be seen from Figs. 2 and 3, one or two or more products with respective wireless tags T are placed in a shopping basket B held in the storage box 20, so that the POS register and the like can acquire product information and other information from the wireless tag system 10. It should be noted that Figs. 2 and 3 show a state in which a product G1 with a wireless tag T1, a product G2 with a wireless tag T2, and a product G3 with a wireless tag T3 are placed in the shopping basket B.

First, referring to the drawings, the storage box 20 will be described in detail.

Since the storage box 20 is formed in a box shape as a whole, it has a vertical direction, and has a lateral direction and a depth direction (or a longitudinal direction) which are both orthogonal to the vertical direction. The lateral direction and the depth direction (longitudinal direction) are reversed depending on the direction in which the storage box 20 is viewed.

The storage box 20 includes an outer box (casing) 21, an inner box 22, and a top plate 23. The outer box 21 is made of a material, e.g., a metal plate, that blocks radio waves to disable passage therethrough. The outer box 21 has an opening 21a on top in the vertical direction, and has inner surfaces, i.e., a rectangular inner bottom surface 21b facing the opening 21a, and four inner side surfaces 21c to 21f respectively connected to four sides of the inner bottom surface 21b. The inner side surfaces 21c to 21f define the opening 21a at the upper edges thereof in a state where the inner side surfaces 21c and 21e face each other and the inner side surfaces 21d and 21f face each other.

The inner box 22 is a box opened on top to hold the shopping basket B inserted from above in the vertical direction, that is, a box defining an internal space for holding the shopping basket B to serve as the predetermined communication area S mentioned above. The inner box 22 is made of a material, e.g., a synthetic resin, enabling radio waves to pass therethrough. The inner box 22 is configured to have an opening 22a on top through which the shopping basket B can be inserted, and to have outer surfaces, i.e., a rectangular outer bottom surface 22b and four outer surfaces 22c to 22f respectively connected to four sides of the outer bottom surface 22b. The outer surfaces 22c to 22f define the opening 22a at the upper edges thereof. The inner box 22 configured in this way is held in the outer box 21 via a predetermined gap. Specifically, the inner box 22 is formed so that, when it is held, the opening 22a is substantially flush with the opening 21a, and the outer bottom surface 22b faces the inner bottom surface 21, while the outer side surfaces 22c to 22f face the respective inner side surfaces 21c to 21f.

The top plate 23 is made of a material, e.g., a metal plate, that blocks radio waves to disable passage therethrough. The top plate 23 has outer edges, which are larger than those of the opening 21a of the outer box 21, and define an opening 23a near the center so as to have substantially the same rectangular shape as the opening 22a of the inner box 22. Thus, the top plate 23 is assembled to the outer box 21 and the inner box 22 held in the outer box 21 so as to close the gap between the outer and inner boxes 21 and 22 (the square annular gap around the inner box 22 as viewed perpendicularly from above) .

Next, with reference to the drawings, the first wireless communication device 30 and the second wireless communication device 40 will be described in detail.

The first wireless communication device 30 includes a first control unit 31 and an antenna 32. The first control unit 31 is configured to include a circuit or the like that performs transmission using a known radio wave method in response to an instruction or the like from the control device 50. The first control unit 31 includes an oscillator, a modulator, an amplifier, and a demodulator, and is connected to the antenna 32 via the cable 33. For example, the first control unit 31 is configured to allow the modulator to modulate the oscillation signal generated by the oscillator, and output the modulated waves as transmission waves (transmission radio waves) via the antenna 32. When radio waves are received from a wireless tag T via the antenna 32, the first control unit 31 is configured to allow the demodulator to demodulate the radio waves to thereby acquire the product information and other information recorded on the wireless tag T.

The second wireless communication device 40 includes a second control unit 41 and an antenna 42, which have the same functions as those of the first control unit 31 and the antenna 32 described above, and also includes a cable 43 connecting between the second control unit 41 and the antenna 42. The second wireless communication device 40 is configured as a wireless communication device having functions equivalent to those of the first wireless communication device 30 to operate in response to an instruction or the like from the control device 50.

The antenna 32 of the first wireless communication device 30 configured in this way is arranged between the inner bottom surface 21b and the outer bottom surface 22b, so that the transmission direction of the transmission waves (see the arrow F1 of Fig. 2) is orthogonal to the outer bottom surface 22b in the vicinity of the center of the inner bottom surface 21b. The antenna 42 of the second wireless communication device 40 is arranged between the inner side surface 21c and the outer side surface 22c, so that the transmission direction of the transmission waves (see the arrow F2 of Fig. 2) is orthogonal to the outer side surface 22c in the vicinity of the center of the inner side surface 21c. Specifically, the antenna 32 of the first wireless communication device 30 and the antenna 42 of the second wireless communication device 40 are arranged so that the transmission directions of the transmission waves are orthogonal to each other.

With such an arrangement configuration or the like, stable wireless communication can be realized with respect to the wireless tags T in the predetermined communication area S that is an internal space defined by the inner box 22, and the reading success rate for the wireless tags T can be enhanced. The reason for this is as follows. Specifically, in the vicinity of the inner surfaces of the outer box 21, a null range is likely to occur due to the reflection of radio waves on the inner surfaces. However, since the inside of the inner box 22 held in the outer box 21 serves as the predetermined communication area S, the wireless tags T in the inner box 22 (in the predetermined communication area S) can be away from the vicinity of the inner surfaces of the outer box 21 in which the null range is likely to occur. In addition, the reason for this is that the top plate 23 can minimize leakage of the transmission waves to the outside via the opening 21a of the outer box 21.

The control device 50 is mainly configured by a microcomputer as an example. Specifically, the control device 50 includes a CPU (central processing unit) 50A performing calculation, and a main memory 50B as a work area, and also includes a system bus and an input/output interface, both of which are not shown, to configure a microcomputer together with a memory 51C. As will be described later, the CPU 50A controls operation of the control units.

In the memory 51C (including RAM (read only memory) 51Ca and ROM (random access memory) 51 Cb), a predetermined program or the like for the control is stored in advance so as to be executed by the CPU 50A. Therefore, the memory 51C functions as a non-transitory computer-readable recording medium, and the procedure of the program related to predetermined control processing is stored as a source code.

The program is read into the main memory 50B by the CPU 50A and executed. The main memory 50B is configured to be readable and writable using a memory element such as RAM. The CPU 50A is an element that plays a central role in the calculation performed in the computer system, and may have a different name (e.g., a processor or an arithmetic unit), as a matter of course, as long as it has the same functions. The control processing may be readably stored in an external storage device.

The control processing executed by the control device 50 (i.e., the CPU 50A) will be described later.

Next, the processing performed by the first and second wireless communication devices 30 and 40 will be described with reference to the drawings. This processing is performed under the control of the control device 50 (i.e., the CPU 50A) when reading a wireless tag T in the shopping basket B inserted in the storage box 20.

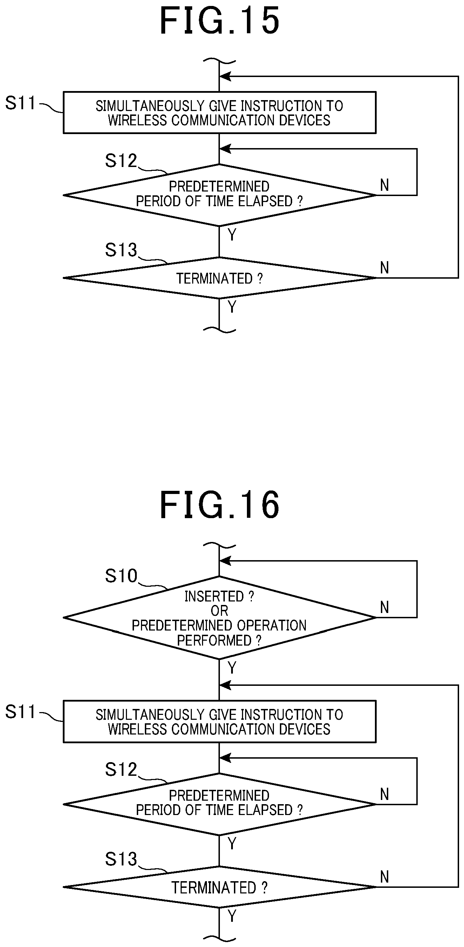

When the shopping basket B is inserted in the storage box 20, the control device 50 instructs the first and second wireless communication devices 30 and 40 to start wireless communication processing (transmission instructions related to transmission of transmission waves) at predetermined intervals for a predetermined time (steps S11 to S13 of Fig. 15).

Specifically, the control device 50 outputs a transmission instruction for transmitting transmission waves on the channel 23 (23CH: 920.4 MHz) for a predetermined period of time or more to the first wireless communication device 30, while outputting a transmission instruction for transmitting transmission waves for a predetermined period of time or more to the second wireless communication device 40 on the channel 32 (32CH: 922 MHz) that does not interfere the channel 23 (step S11 of Fig. 15).

In particular, the control device 50 simultaneously gives transmission instructions to the first and second wireless communication devices 30 and 40. In the present embodiment, the frequency between the channels 23 and 32 will be referred to as "constant frequencies (or specific frequencies)" that determine the width of separation between these channels on the frequency band (or o (n the frequency axis).

The control device 50 may automatically give the above transmission instructions by detecting the state in which the shopping basket B is inserted in the storage box 20, using a sensor or the like provided to the storage box 20, or according to a predetermined operation or the like after insertion of the car B in the storage box 20 (steps S10 to S13 of Fig. 16).

In response to the transmission instructions from the control device 50, the first and second wireless communication devices 30 and 40 substantially simultaneously perform wireless communication processing to wirelessly communicate with the wireless tags T in the predetermined communication area S. Therefore, the first and second wireless communication devices 30 and 40 substantially simultaneously transmit transmission waves on different channels separated from each other by a predetermined channel number (or frequency) or more for a predetermined period of time or more.

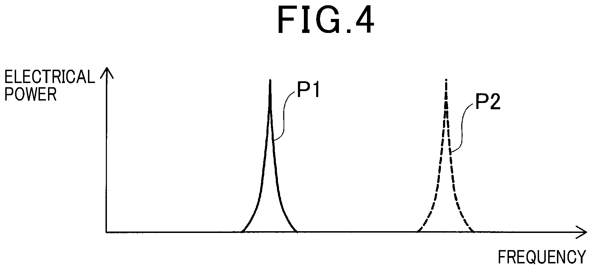

Referring to Fig. 4, the reason why transmission waves are substantially simultaneously transmitted on different channels will be described. Fig. 4 is a diagram illustrating electrical power obtained by a wireless tag T when receiving transmission waves transmitted substantially simultaneously on different channels. The vertical axis represents the electrical power obtained by the wireless tag T, and the horizontal axis represents the frequency of the transmission waves.

Wireless tags T receive transmission waves from the wireless communication devices to obtain electrical power required for operation as wireless tags. Therefore, if transmission waves are simply transmitted from the first wireless communication device 30, the wireless tag T as a target of wireless communication does not necessarily obtain required electrical power from the transmission waves due to the influence of the null range, or interference of radio waves, or the like. Similarly, if transmission waves are simply transmitted from the second wireless communication device 40, the wireless tag T as a target of wireless communication does not necessarily obtain required electrical power from the transmission waves.

In this regard, if transmission waves are substantially simultaneously transmitted from the first and second wireless communication devices 30 and 40 on different channels, the wireless tag T can receive both of the transmission waves substantially simultaneously because the frequency bandwidth of the wireless tag T is wide. That is, as shown in Fig. 4, the electrical power supply due to reception of transmission waves from the first wireless communication device 30 (see reference sign P1 of Fig. 4) and the electrical power supply due to reception of transmission waves from the second wireless communication device 40 (see reference sign P2 in Fig. 4) are conducted substantially simultaneously. Therefore, the wireless tag T can reliably obtain electrical power required for the operation as a wireless tag. In this case, the wireless tag T sends a reply to the wireless communication device, from which stronger transmission waves have been received, so that necessary data and other data can be transmitted.

As described above, in the wireless tag system 10 according to the present embodiment, the first and second wireless communication devices 30 and 40 perform wireless communication processing to wirelessly communicate with a wireless tag T in the predetermined communication area S. When performing this processing, transmission waves are substantially simultaneously transmitted (simultaneously for a predetermined period of time or more) on different channels separated from each other by a predetermined channel number (or frequency) or more.

Thus, one wireless tag T should receive transmission waves from the first and second wireless communication devices 30 and 40, and electrical power required for the operation of the wireless tag can be easily obtained. Therefore, electrical power according to the transmission waves can be reliably supplied to the wireless tag T as a target of wireless communication. Consequently, stable wireless communication can be achieved.

In particular, the wireless tag system 10 includes the control device 50 that gives transmission instructions regarding transmission of transmission waves to the first and second wireless communication devices 30 and 40, which perform wireless communication processing, in turn, in response to the transmission instructions received from the control device 50. Thus, the control device 50 can collectively control transmission of transmission waves sent from the first and second wireless communication devices 30 and 40. In particular, even when a specific channel becomes unavailable, the control device 50 can keep track of the unusable state to control the first and second wireless communication devices 30 and 40, avoiding the specific channel in question.

Furthermore, the wireless tag system 10 according to the present embodiment includes the outer box 21 disabling passage of radio waves therethrough except for the opening 21a, and the inner box 22 allowing passage of radio waves therethrough and held in the outer box 21 via the opening 21a, with the predetermined communication area S as an internal space defined by the inner box 22 held in the outer box 21. The antenna 32 of the first wireless communication device 30 and the antenna 42 of the second wireless communication device 40 are arranged between the inner surface of the outer box 21 and the outer surface of the inner box 22.

Therefore, transmission waves are prevented from being leaked from the outer box 21 to the outside. Accordingly, electrical power can be reliably supplied to the wireless tags T arranged in the internal space of the inner box 22 as the predetermined communication area S. In particular, in the vicinity of the inner surface of the outer box 21, a null range is likely to occur due to reflection of radio waves on the inner surface; however, since the internal space of the inner box 22 held in the outer box 21 serves as the predetermined communication area S, the wireless tags T in the internal space (in the predetermined communication area) of the inner box 22 can be away from the vicinity of the inner surface of the outer box where a null range is likely to occur. Therefore, electrical power can be reliably supplied to the wireless tags T in the internal space of the inner box 22.

In particular, the antenna 32 of the first wireless communication device 30 is arranged between the inner bottom surface 21b of the outer box 21 and the outer bottom surface 22b of the inner box 22, while the antenna 42 of the second wireless communication device 40 is arranged between the inner side surface 21c of the outer box 21 and the outer side surface 22c of the inner box 22. Accordingly, the output direction of the transmission waves transmitted from the antenna 32 of the first wireless communication device 30 is substantially orthogonal to the output direction of the transmission waves transmitted from the antenna 42 of the second wireless communication device 40. Thus, electrical power can be reliably supplied to the wireless tags T regardless of the orientations of the wireless tags T in the internal space of the inner box 22.

The antenna 42 of the second wireless communication device 40 does not necessarily have to be arranged between the inner side surface 21c of the outer box 21 and the outer side surface 22c of the inner box 22, but may be arranged between the inner side surface 21d of the outer box 21 and the outer side surface 22d of the inner box 22, or between the inner side surface 21e of the outer box 21 and the outer side surface 22e of the inner box 22, or between the inner side surface 21f of the outer box 21 and the outer side surface 22f of the inner box 22. Furthermore, the antenna 32 of the first wireless communication device 30 does not necessarily have to be arranged between the inner bottom surface 21b of the outer box 21 and the outer bottom surface 22b of the inner box 22, but may be arranged between an inner side surface of the outer box 21 and an outer side surface of the inner box 22 so as to face the antenna 42, or may be arranged between an inner side surface of the outer box 21 and an outer side surface of the inner box 22 so that the output direction of the transmission waves is orthogonal to the antenna 42.

### [Second Embodiment]

Next, a wireless tag system according to a second embodiment of the present invention will be described with reference to the drawings.

The second embodiment is mainly different from the first embodiment in that unmodulated waves are transmitted as transmission waves from one wireless communication device. Therefore, like reference signs are given to like components of the first embodiment to omit duplicate description.

Transmission waves transmitted to wirelessly communicate with a wireless tag T are modulated to carry signals from the viewpoint of electrical power supply, this may lower the supply efficiency for unmodulated waves. In this regard, in the present embodiment, one wireless communication device may transmit transmission waves modulated for wireless communication, and the other wireless communication device may transmit unmodulated waves as transmission waves for supplying electrical power to the wireless tag T to thereby easily enhance the power supply efficiency.

This is because unmodulated waves have a higher electrical power density than modulated waves that are modulated to carry signal waves, and thus because electrical power can be more reliably supplied to the wireless tag T as a target of communication according to the unmodulated wave, and even more stable wireless communication can be achieved.

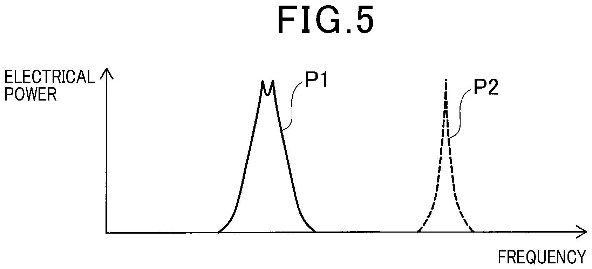

In the present embodiment, the second wireless communication device 40 is configured to transmit unmodulated waves. Therefore, as can be seen from Fig. 5, the wireless tag T can receive electrical power supply due to reception of modulated transmission waves from the first wireless communication device 30 (see reference sign P1 of Fig. 5), and electrical power supply due to reception of unmodulated waves from the second wireless communication device 40 (see reference sign P2 of Fig. 5).

The wireless communication device transmitting unmodulated waves does not necessarily have to be the second wireless communication device 40, but may be the first wireless communication device 30.

### [Third Embodiment]

Next, a wireless tag system according to a third embodiment of the present invention will be described with reference to the drawings.

The third embodiment is mainly different from the first embodiment in that the first wireless communication device 30 is configured as a master unit and the second wireless communication device 40 is configured as a slave unit. Therefore, like reference signs are given to like components of the first embodiment to omit duplicate description.

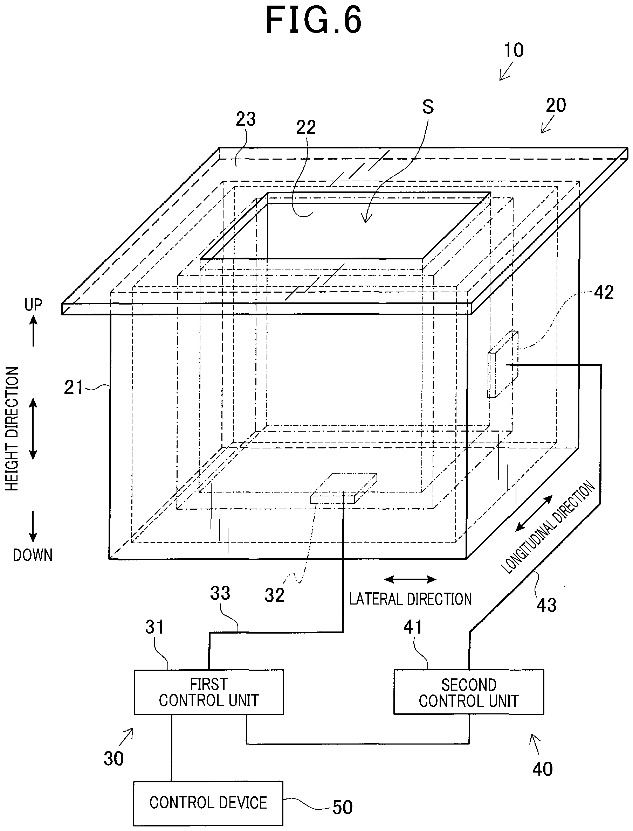

In the present embodiment, as shown in Fig. 6, the first wireless communication device 30 is configured as a master unit and the second wireless communication device 40 is configured as a slave unit, so that a transmission instruction mentioned above can be supplied from the first wireless communication device 30 to the second wireless communication device 40. In other words, a transmission instruction is supplied from the control device 50 to the first wireless communication device 30. Thus, the first wireless communication device 30 gives a transmission instruction to the second wireless communication device 40 at each transmission time point of transmitting transmission waves, and the second wireless communication device 40 performs wireless communication processing in response to the transmission instruction received. In the present embodiment, the control device 50 is configured to collectively receive data acquired through the wireless communication processing of the first and second wireless communication devices 30 and 40 and other data, from the first wireless communication device 30.

Even in this way, channels and transmission times in the first and second wireless communication devices 30 and 40 can be easily controlled. In particular, there is no need to use higher-level devices respectively controlling the first and second wireless communication device 30 and 40. In addition to that, even in a situation where a specific channel cannot be used, the first and second wireless communication devices 30 and 40 can be controlled so as to avoid the specific channel in question by allowing the first wireless communication device 30 to keep track of the situation.

As a first modification of the third embodiment, it may be so configured that, under the transmission control of the control device 50, the first wireless communication device 30 transmits a control table, in which at least channels and transmission times of transmission waves are time-scheduled, to the second wireless communication device 40, and the second wireless communication device 40 performs wireless communication processing according to the control table received. Even in this way, channels and transmission times of the first and second wireless communication devices 30 and 40 can be easily controlled. In particular, there is no need to use higher-level devices respectively controlling the first and second wireless communication devices 30 and 40. In addition to that, the first and second wireless communication devices 30 and 40 are not required to communicate with each other every time transmission waves are transmitted. Accordingly, frequency of communication between the devices can be reduced.

The characteristic configuration according to the first modification of the third embodiment may be applied to the first embodiment. Specifically, as a first modification of the first embodiment, it may be configured so that the control device 50 transmits a control table, in which at least channels and transmission times of transmission waves are time-scheduled, to the first and second wireless communication devices 30 and 40, and the first and second wireless communication devices 30 and 40 perform wireless communication processing according to the control table received from the control device 50. Thus, the first and second wireless communication devices 30 and 40 do not need to communicate with the control device 50 every time the transmission waves are transmitted. Accordingly, frequency of communication with the control device 50 can be reduced.

It should be noted that the second wireless communication device 40 may be a master unit, and the first wireless communication device 30 may be a slave unit. The characteristic configurations of the present embodiment and the modification in which one of the wireless communication devices is a master unit and the rest are slave units can be applied to other embodiments and the like.

### [Fourth Embodiment]

Next, a wireless tag system according to a fourth embodiment of the present invention will be described with reference to the drawings.

The fourth embodiment is mainly different from the first embodiment in that the first wireless communication device 30 detects a transmission status of transmission waves in the second wireless communication device 40 and performs wireless communication processing according to the detection results. Therefore, like reference signs are given to like components of the first embodiment to omit duplicate description.

In the present embodiment, the first control unit 31 of the first wireless communication device 30 is configured to be able to detect a transmission status, such as the channel used for transmission waves, in the second wireless communication device 40 according to the detection results derived from a detection unit. This detection unit detects the transmission status by receiving and analyzing transmission waves transmitted from the second wireless communication device 40. Then, when performing wireless communication processing, the first wireless communication device 30 simultaneously transmits transmission waves for a predetermined period of time on a channel different and separated from the channel of the second wireless communication device 40 by a predetermined channel number or more on the frequency band, according to the detection results derived from the detection unit.

Even in this way, channels and transmission times of the first and second wireless communication devices 30 and 40 can be easily controlled. In particular, there is no need to use higher-level devices that respectively control the first and second wireless communication devices 30 and 40. In addition to that, there is also no need to use the wireless communication device that serves as a master unit for controlling other wireless communication devices. As will be described later, when three or more wireless communication devices are adopted, at least some of the wireless communication devices may be provided with the detection unit mentioned above, so that stable wireless communication can be continued in the occurrence of a failure disabling transmission of transmission waves in one of the wireless communication devices.

### [Fifth Embodiment]

Next, a wireless tag system according to a fifth embodiment of the present invention will be described with reference to the drawings.

The fifth embodiment is mainly different from the first embodiment in that the antenna arranged between an inner side surface of the outer box 21 and an outer side surface of the inner box 22 is inclined. Therefore, like reference signs are given to like components of the first embodiment to omit duplicate description.

Since the storage box 20 is provided with an opening 23a for inserting the shopping basket B therethrough, radio waves (transmission waves) may leak from the opening 23a. In particular, if transmission waves leak from the opening 23a passing over the top plate 23, for example, the wireless tag affixed to a product handled by the adjacent POS register (the wireless tag that is not the target of wireless communication) may be erroneously read.

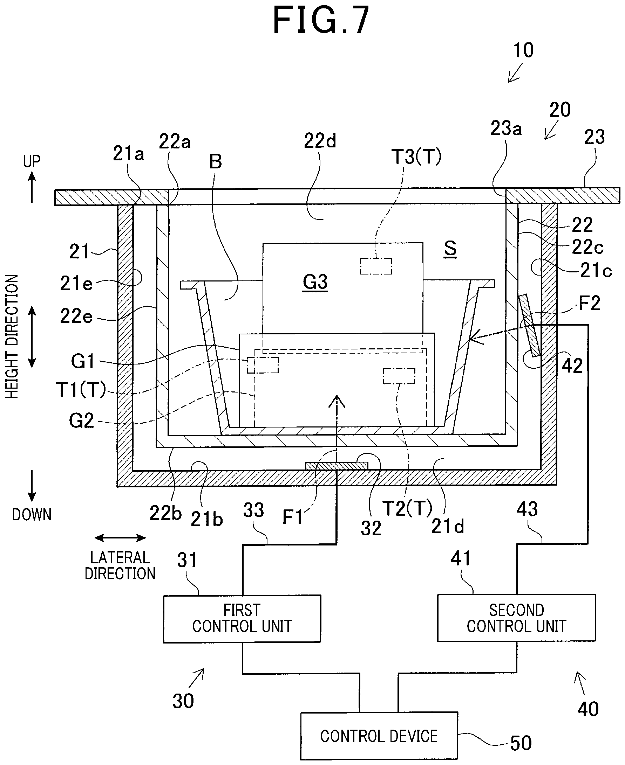

In this regard, in the present embodiment, the antenna 42 of the second wireless communication device 40 is arranged so as to incline with respect to the inner side surface in a direction in which the output direction of the transmission waves is away from the opening 23a. Specifically, as shown in Fig. 7, the antenna 42 is arranged being inclined downward with respect to the inner side surface 21c so that the output direction of the transmission waves (see the arrow F2 of Fig. 7) is away from the opening 23a.

Thus, compared to the case where the antenna 42 of the second wireless communication device 40 is inclined with respect to the inner side surface in the direction in which the output direction of the transmission waves approaches the opening 23a, transmission waves transmitted from the antenna 42 are less likely to leak from the opening 23a passing over the top plate 23, to thereby minimize erroneous reading of a wireless tag located outside the predetermined communication area S.

The characteristic configuration of the present embodiment in which the antenna arranged between an inner side surface of the outer box 21 and an outer side surface of the inner box 22 is inclined can be applied to other embodiments and the like.

### [Sixth Embodiment]

Next, a wireless tag system according to a sixth embodiment of the present invention will be described with reference to the drawings.

The sixth embodiment is mainly different from the first embodiment in that antennas are arranged on both lateral sides and both depth direction sides (both longitudinal sides) in the predetermined communication area S. Therefore, like reference signs are given to like components of the first embodiment to omit duplicate description.

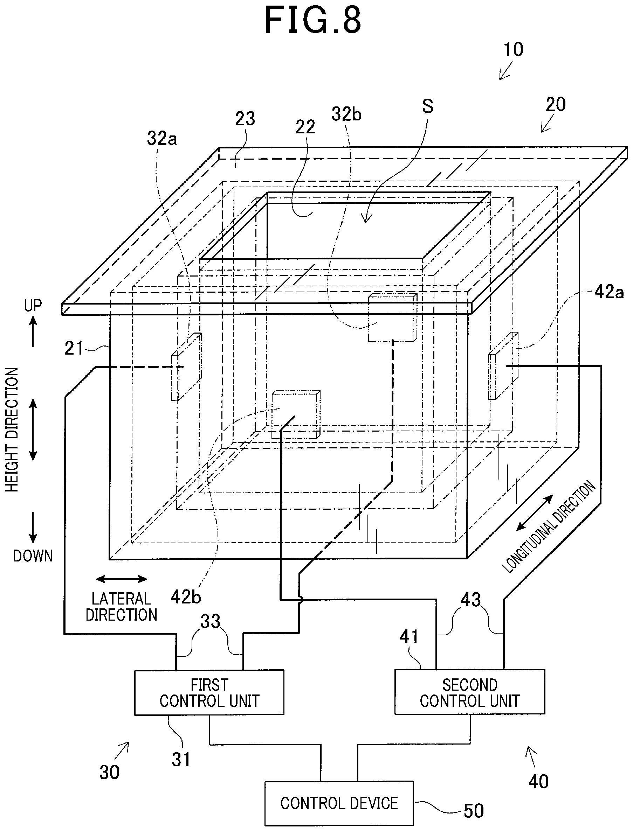

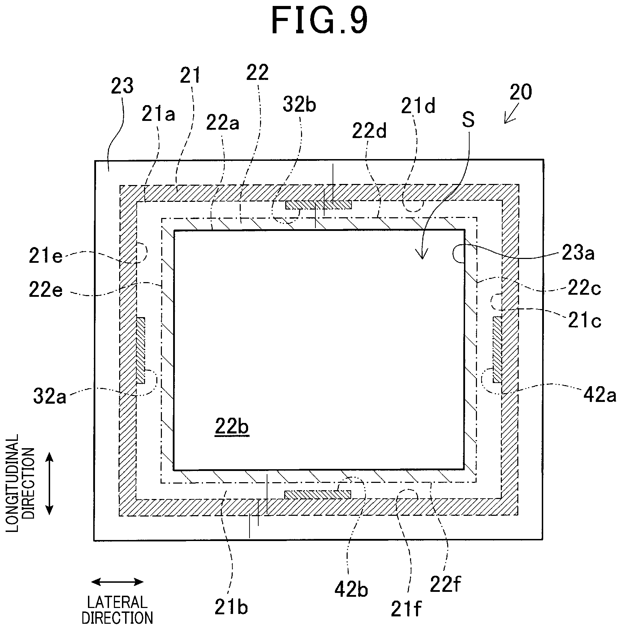

In the present embodiment, as shown in Figs. 8 and 9, it is so configured that the first wireless communication device 30 includes two antennas 32a and 32b, and the second wireless communication device 40 includes two antennas 42a and 42b.

Specifically, the antenna 32a is arranged between the inner side surface 21e and the outer side surface 22e so that the transmission direction of the transmission waves is orthogonal to the outer side surface 22e in the vicinity of the center of the inner side surface 21e. The antenna 32b is arranged between the inner side surface 21d and the outer side surface 22d so that the transmission direction of the transmission waves is orthogonal to the outer side surface 22d in the vicinity of the center of the inner side surface 21d. The antenna 42a is arranged between the inner side surface 21c and the outer side surface 22c so that the transmission direction of the transmission waves is orthogonal to the outer side surface 22c in the vicinity of the center of the inner side surface 21c. The antenna 42b is arranged between the inner side surface 21f and the outer side surface 22f so that the transmission direction of the transmission waves is orthogonal to the outer side surface 22f in the vicinity of the center of the inner side surface 21f.

Specifically, the four antennas are respectively arranged between the inner side surfaces of the outer box 21 and the outer side surfaces of the inner box 22 so that the antennas 32a and 42a face each other in the lateral direction and the antennas 32b and 42b face each other in the depth direction. It should be noted that the antenna 32a may correspond to an example of "the first antenna of the first wireless communication device", and the antenna 32b may correspond to an example of "the second antenna of the first wireless communication device". Furthermore, the antenna 42a may correspond to an example of "the first antenna of the second wireless communication device", and the antenna 42b may correspond to an example of "the second antenna of the second wireless communication device".

Then, for the first and second wireless communication devices 30 and 40, the control device 50 alternates, at predetermined intervals, processing of simultaneously giving a transmission instruction using the antenna 32a and a transmission instruction using the antenna 42a, and processing of simultaneously giving a transmission instruction using the antenna 32b and a transmission instruction using the antenna 42b.

The first and second wireless communication devices 30 and 40 simultaneously perform wireless communication processing for a predetermined period of time or more on different channels which separate the transmission waves transmitted from the antenna 32a from the transmission waves transmitted from the antenna 42a by a predetermined frequency or more, and also perform wireless communication processing for a predetermined period of time or more on different channels which separate the transmission waves transmitted from the antenna 32b from the transmission waves transmitted from the antenna 42b by a predetermined frequency or more.

Thus, for the wireless tags T in the predetermined communication area S that is the internal space defined by the inner box 22, there can be repeatedly provided a time when electrical power is supplied with transmission waves transmitted from the antennas 32a and 42a, and a time when electrical power is supplied with transmission waves transmitted from the antennas 32b and 42b. In particular, since transmission waves are simultaneously transmitted from the two antennas facing each other for a predetermined period of time or more, radio waves can be easily mutually intensified and the electrical power supply to the wireless tags T can be increased. Therefore, even if the radio wave intensity of the transmission waves is lowered for the purpose of minimizing erroneous reading of wireless tags T located outside the predetermined communication area S, electrical power corresponding to the transmission waves can be reliably supplied to the wireless tag T as a target of wireless communication.

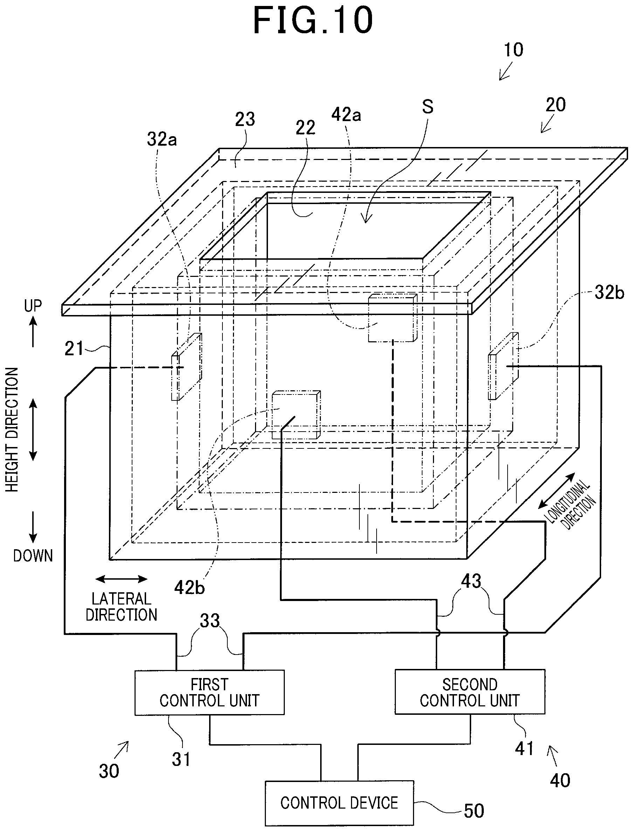

As a modification of the present embodiment, as shown in Fig. 10, the four antennas may be respectively arranged between the inner side surfaces of the outer box 21 and the outer side surfaces of the inner box 22 such that the antennas 32a and 32b face each other and the antennas 42a and 42b face each other. Even in this way, for the wireless tags T in the predetermined communication area S that is the internal space defined by the inner box 22, there can be repeatedly provided a time when electrical power is supplied with the transmission waves transmitted from the antennas 32a and 42a, and a time when electrical power is supplied with the transmission waves transmitted from the antennas 32b and 42b. Therefore, even if the radio wave intensity of the transmission waves is lowered for the purpose of minimizing erroneous reading of wireless tags T located outside the predetermined communication area S, electrical power corresponding to the transmission waves can be reliably supplied to the wireless tag T as a target of wireless communication.

The characteristic configurations of the present embodiment and the modification in which antennas are respectively arranged in four directions in the predetermined communication area S can be applied to other embodiments and the like.

### [Seventh Embodiment]

Next, a wireless tag system according to a seventh embodiment of the present invention will be described with reference to the drawings.

The seventh embodiment is mainly different from the first embodiment in that a third wireless communication device 60 is adopted in addition to the first and second wireless communication devices 30 and 40. Therefore, like reference signs are given to like components of the first embodiment to omit duplicate description.

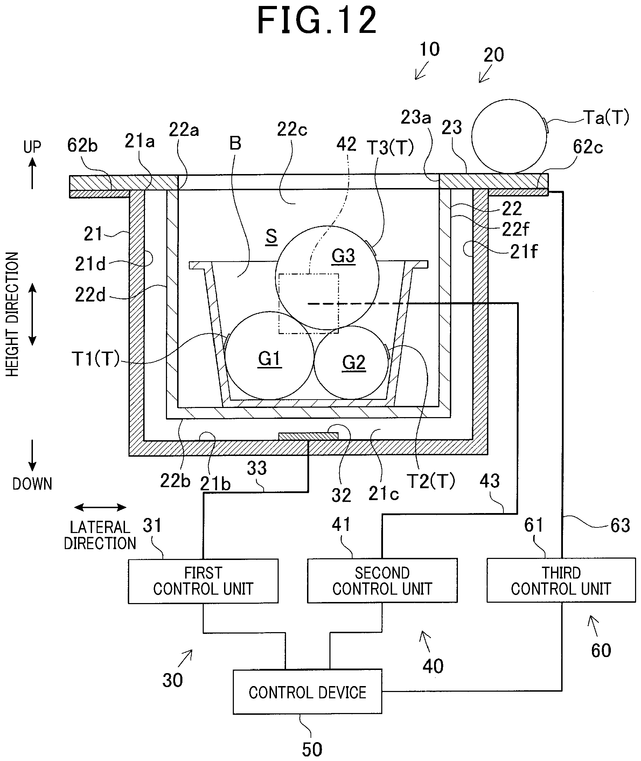

In the present embodiment, as shown in Fig. 12, the wireless tag system 10 is configured to newly include a third wireless communication device 60 in addition to the first and second wireless communication devices 30 and 40. The third wireless communication device 60 includes a third control unit 61 and antennas 62a to 62c, which have the same functions as those of the first control unit 31 and the antenna 32 described above, and also includes a cable 63 connecting the third control unit 61 to the antennas 62a to 62c. The third wireless communication device 60 is configured as a wireless communication device having functions equivalent to those of the first wireless communication device 30, and these functions are exerted according to an instruction or the like supplied from the control device 50 (see the transmission instruction flow of Fig. 15).

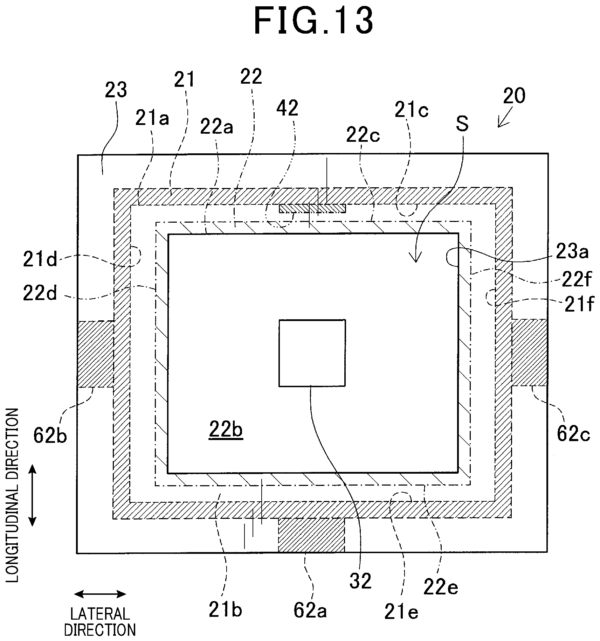

As shown in Fig. 13, the antennas 62a to 62c are arranged at positions outside the outer box 21, i.e., around the opening 21a, to read wireless tags T located outside the predetermined communication area S. Specifically, the antenna 62a is provided on the lower surface of the top plate 23 on the side where the user stands to place the product with a wireless tag T in the inner box 22, so that the transmission direction of the transmission waves will be upward. The antennas 62b and 62c are provided on the lower surface of the top plate 23 so as to face each other via the opening 21a, so that the transmission directions of the transmission waves will be upward.

With the antennas 62a to 62c being arranged in this way, the third wireless communication device 60 can read a wireless tag (see reference sign Ta of Fig. 12) on the surface around the opening 21a outside the predetermined communication area S more easily than the first and second wireless communication devices 30 and 40. Thus, erroneous reading can be minimized, which may be due to the wireless tag T (Ta) on the surface around the opening 21a being read by the first wireless communication device 30 or the second wireless communication device 40.

In the present embodiment, the control device 50 uses received signal strength (RSSI) resulting from wireless communication of the first, second and third wireless communication device 30, 40 and 60 to serve as a reading unit that reads information from a wireless tag T in the predetermined communication area S that is an internal space defined by the inner box 22. Due to the antenna arrangement as described above, the first wireless communication device 30 or the second wireless communication device 40 will have a received signal strength that is higher when reading the wireless tags T (T1 to T3) in the predetermined communication area S than when reading the wireless tag T (Ta) outside the predetermined communication area S, while the third wireless communication device 60 will have a received signal strength that is higher when reading the wireless tag T (Ta) outside the predetermined communication area S than when reading the wireless tags T (T1 to T3) in the predetermined communication area S.

Therefore, even if a wireless tag T is read by all the wireless communication devices, the wireless tag T for which the first wireless communication device 30 or the second wireless communication device 40 has a higher received signal strength is determined to be a wireless tag T in the predetermined communication area S, and the wireless tag T for which the third wireless communication device 60 has a higher received signal strength is determined to be a wireless tag T outside the predetermined communication area S. Thus, an accurate determination can be made as to whether the read wireless tag T is on the inside of the predetermined communication area S.

In particular, by alternately repeating a time when wireless communication of the first and second wireless communication devices 30 and 40 is performed and a time when the wireless communication of the third wireless communication device 60 is performed, wireless communication of the first and second wireless communication devices 30 and 40 and wireless communication of the third wireless communication device 60 can be mutually exclusively performed. Thus, electrical power obtained by the wireless tag T according to the transmission waves from the first wireless communication device 30 or the second wireless communication device 40 will not be used during wireless communication with the third wireless communication device 60. This may enhance measurement accuracy of the received signal strength obtained during wireless communication of the third wireless communication device 60. Accordingly, an even more accurate determination can be made as to whether the read wireless tag T is on the inside of the predetermined communication area S.

The third wireless communication device 60 is not limited to have a configuration including the antennas 62a to 62c, but may have a configuration including one or two or more antennas which are arranged outside the outer box 21 so that the wireless tag T in the predetermined communication area S is less likely to be read. Even in this way, the wireless tag T that has been read not only by the first and second wireless communication devices 30 and 40 but also by the third wireless communication device 60 can be determined to be a wireless tag T having a high probability of being located outside the predetermined communication area S. This may minimize erroneous reading of the wireless tag T located outside the predetermined communication area S.

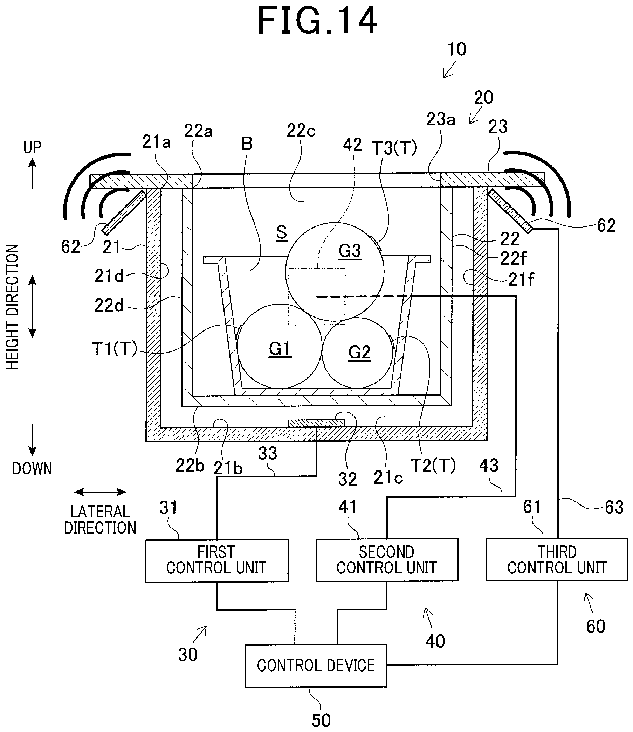

Specifically, for example, as in the modification of the present embodiment shown in Fig. 14, the antenna 62 of the third wireless communication device 60 may be arranged being inclined with respect to a plane provided by the opening 21a so that the output direction of the transmission waves will be away from the opening 21a. Thus, the third wireless communication device 60 is less likely to read the wireless tag T in the predetermined communication area S, and thus erroneous reading due to the reading that would be performed by the third wireless communication device 60 can be minimized.

The characteristic configurations of the present embodiment and the modification in which the third wireless communication device 60 is newly adopted can be applied to other embodiments and the like.

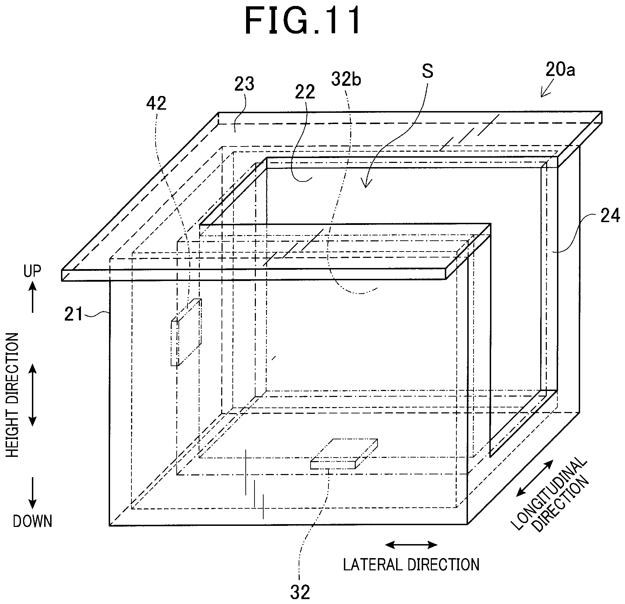

The present invention is not limited to the above embodiments, but may be embodied as follows, for example.
(1) The predetermined communication area S is not limited to be configured by the storage box 20 having an opening, i.e., the opening 23a, on top, but may be configured by a storage box having an opening in at least a part of another surface. For example, as shown in Fig. 11, the predetermined communication area S may be configured by a storage box 20a that is open from the top to a side surface as an opening 24. Furthermore, the storage box is not limited to have a rectangular bottom surface, but may have, for example, a polygonal or circular bottom surface. Furthermore, the predetermined communication area S is not limited to be an internal space clearly defined by the wall surfaces or the like such as of the storage box 20 or 20a, but may be configured by a part of a space not clearly defined by wall surfaces or the like.
(2) The present invention is not limited to be applied to the wireless tag system 10 having two wireless communication devices 30 and 40, but may be applied to a wireless tag system having three or more wireless communication devices. In such a configuration, the wireless communication devices simultaneously transmit transmission waves for a predetermined period of time or more on different channels separated from each other by a predetermined channel number or more when performing wireless communication processing to wirelessly communicate with a wireless tag T in the predetermined communication area S. Even in this way, transmission waves from the plurality of wireless communication devices should be received by one wireless tag T, and electrical power required for the operation of this wireless tag can be easily obtained. Therefore, electrical power according to transmission waves can be reliably supplied to the wireless tag T as a target of wireless communication, as a result of which, stable wireless communication can be achieved.
(3) Furthermore, the present invention is not limited to be applied to a wireless tag system for selling products, but may be applied to a wireless tag system targeting wireless tags located in a predetermined communication area within a relatively narrow range.

### [Description of Reference Signs]

10 ... Wireless tag system
20, 20a ... Storage box
21 ... Outer box
22 ... Inner box
30 ... First wireless communication device
32, 32a, 32b ... Antenna
40 ... Second wireless communication device
42, 42a, 42b ... Antenna
50 ... Control device
60 ... Third wireless communication device
62, 42a to 62c ... Antenna
B ... Shopping basket
S ... Predetermined communication area
T, T1 to T3 ... Wireless ta

## Claims

1. A wireless tag system (10) comprising two or more wireless communication devices (30, 40) which are enabled to wirelessly communicate with a wireless tag (T) placed in a communication area (S) physically defined, comprising:
a box (20) providing an opening (22a), the box (20) comprising an outer box (21) disabling passage of radio waves therethrough and an inner box (22) held in the outer box (21) with a gap left between both an inner surface (21e, 21b, 21c) of the outer box (21) and an outer surface (22e, 22b, 22c) of the inner box (22), the inner box (22) enabling passage of the radio waves therethrough, the communication area (S) being defined as an internal space of the inner box (22), the wireless tag (T) being placed in the communication aera (S); and
two or more wireless communication devices (30, 40) including a first wireless communication device (30) and a second wireless communication device (40), the first wireless communication device (30) having an antenna (32, 32a, 32b), the second wireless communication device (40) having an antenna (42, 42a, 42b), the antennas of both the first and second wireless communication devices (30, 40) being arranged in the gap between the outer and inner boxes (21, 22),
wherein the first and second wireless communication devices (30, 40) are adapted to transmit radio waves, serving as transmission waves, on mutually different channels (23CH, 32CH: S11 in Fig. 15) and adapted to simultaneously transmit the transmission waves towards the communication area (S) for a predetermined period of time or a period of time larger than the predetermined period of time , the different channels (23CH, 32CH) being separated from each other in a frequency band by a predetermined frequency or a frequency higher than the predetermined frequency and having no interference in the transmission waves between different channels (23CH, 32CH), the transmission waves transmitted by the two or more wireless communication devices (30, 40) being transmitted into the communication area (S) substantially simultaneously and mutually intensified in the communication area (S) such that electrical power supply to the wireless tag (T) placed within the communication area (S) is stronger than electrical power provided outside the communication area (S); and
the wireless tag (T) is adapted to simultaneously receive the transmission waves transmitted by the first and second wireless communication devices (30, 40).

2. The wireless tag system (10) according to claim 1, wherein one of the first and second wireless communication devices (30, 40) is adapted to transmit unmodulated waves as the transmission waves to the wireless tag (T) to supply electrical power.

3. The wireless tag system (10) according to claim 1 or 2, wherein
one of the first and second wireless communication devices (30, 40) is adapted to supply a transmission instruction related to transmission of the transmission waves to the other of the wireless communication devices (30, 40) at every time point of transmitting the transmission waves; and
the other of the wireless communication devices (30, 40) is adapted to perform the wireless communication processing according to the transmission instruction received.

4. The wireless tag system (10) according to claim 1 or 2, wherein
any one of the two or more wireless communication devices (30, 40) is adapted to transmit a control table, in which at least channels and transmission times of the transmission waves are time-scheduled, to the rest of the wireless communication devices (30, 40); and
the rest of the wireless communication devices (30, 40) is adapted to perform the wireless communication processing according to the control table received.

5. The wireless tag system (10) according to claim 1 or 2, wherein
at least one of the two or more wireless communication devices (30, 40) include a detection unit adapted to detect a transmission status of the transmission waves in the rest of the wireless communication devices (30, 40), and simultaneously transmit the transmission waves according to detection results derived from the detection unit, for the predetermined period of time or the period of time larger than the predetermined period of time on the channel different and separated from channels of the rest of the wireless communication devices (30, 40) by the predetermined frequency or the frequency higher than the predetermined frequency, when performing the wireless communication processing.

6. The wireless tag system (10) according to claim 1 or 2, wherein
the system comprises a control device (50) adapted to provide a transmission instruction related to transmission of the transmission waves to the first and second wireless communication devices (30, 40); and
the two or more wireless communication devices (30, 40) are adapted to perform the wireless communication processing according to the transmission instruction received from the control device (50).

7. The wireless tag system (10) according to claim 1 or 2, wherein
the system comprises a control device (50) adapted to transmit a control table, in which at least channels and transmission times of the transmission waves are time-scheduled, to the two or more wireless communication devices (30, 40); and
the first and second wireless communication devices (30, 40) are adapted to perform the wireless communication processing according to the control table received from the control device (50).

8. The wireless tag system (10) according to claim 1, wherein
the outer box (21) includes, as the inner surface thereof, a rectangular inner bottom surface facing the opening, and four inner side surfaces respectively connected to four sides of the inner bottom surface; and
the antenna (32, 32a, 32b) of the first wireless communication device (30) is arranged between the inner bottom surface and an outer surface of the inner box (22), and the antenna (42, 42a, 42b) of the second wireless communication device (40) is arranged between any one of the four inner side surfaces and an outer surface of the inner box (22).

9. The wireless tag system (10) according to claim 8, wherein the antenna (42, 42a, 42b) of the second wireless communication device (40) is arranged being inclined with respect to the inner side surface such that an output direction of the transmission waves is away from the opening.

10. The wireless tag system (10) according to claim 1, wherein
the outer box (21) includes, as the inner surface thereof, a rectangular inner bottom surface facing the opening, and four inner side surfaces respectively connected to four sides of the inner bottom surface;
the first wireless communication device (30) and the second wireless communication device (40) each include two antennas as first and second antennas (32a, 32b, 42a, 42b);
the antenna (32) of the first wireless communication device (30) is composed of two antennas (32a, 32b) and the antenna (42) of the second wireless communication device (40) is composed of two antennas (42a, 42b), wherein the
four antennas (32a, 32b, 42a, 42b) of the first and second wireless communication devices (30, 40) are arranged in the gap between the outer and inner boxes (21, 22) such that a first antenna (32a, 32b) of the first wireless communication device (30) faces a first antenna (42a, 42b) of the second wireless communication device (40) and a second antenna (32a, 32b) of the first wireless communication device (30) faces a second antenna (42a, 42b) of the second wireless communication device (40); and
the first wireless communication device (30) and the second wireless communication device (40) are adapted to simultaneously perform the wireless communication processing for the predetermined period of time or the period of time larger than the predetermined period of time on the different channels (23CH, 32CH) which separate at which the transmission waves are transmitted from the first antenna (32a, 32b) of the first wireless communication device (30) and from the first antenna (42a, 42b) of the second wireless communication device (40), the different channels (23CH, 32CH) being separate from each other by a predetermined channel number or a channel number larger than the predetermined channel number, or also simultaneously perform the wireless communication processing for the predetermined period of time or the period of time larger than the predetermined period of time on the different channels (23CH, 32CH) at which the separate transmission waves are transmitted from the second antenna (32a, 32b) of the first wireless communication device (30) and from the second antenna (42a, 42b) of the second wireless communication device (40), the different channels (23CH, 32CH) being separate from each other by the predetermined channel number or the channel number larger than the predetermined channel number.

11. The wireless tag system (10) according to claim 1, wherein
the outer box (21) includes, as the inner surface thereof, a rectangular inner bottom surface facing the opening, and four inner side surfaces respectively connected to four sides of the inner bottom surface;
the first wireless communication device (30) and the second wireless communication device (40) each include two antennas as first and second antennas (32a, 32b, 42a, 42b);
the antenna (32) of the first wireless communication device (30) is composed of two antennas (32a, 32b) and the antenna (42) of the second wireless communication device (40) is composed of two antennas (42a, 42b), wherein the four antennas (32a, 32b, 42a, 42b) of the first and second wireless communication devices (30, 40) are arranged in the gap between the outer and inner boxes (21, 22) such that a first antenna (32a, 32b) and a second antenna (32a, 32b) of the first wireless communication face each other, and a first antenna (42a, 42b) and a second antenna (42a, 42b) of the second wireless communication face each other; and
the first wireless communication device (30) and the second wireless communication device (40) are adapted to simultaneously perform the wireless communication processing for the predetermined period of time or the period of time larger than the predetermined period of time on the different channels (23CH, 32CH) at which the separate transmission waves are transmitted from the first antenna (32a, 32b) of the first wireless communication device (30) and from the first antenna (42a, 42b) of the second wireless communication device (40), the different channels (23CH, 32CH) being separate from each other by a predetermined channel number or a channel number larger than the predetermined channel number, or also simultaneously perform the wireless communication processing for the predetermined period of time or the period of time larger than the predetermined period of time on the different channels (23CH, 32CH) at which the separate transmission waves are transmitted from the second antenna (32a, 32b) of the first wireless communication device (30) and the second antenna (42a, 42b) of the second wireless communication device (40), the different channels (23CH, 32CH) being separate from each other by the predetermined channel number or the channel number larger than the predetermined channel number.

12. The wireless tag system (10) according to claim 1, wherein
the two or more wireless communication devices (30, 40) include a third wireless communication device in addition to the first wireless communication device (30) and the second wireless communication device (40);
the system includes a reading unit adapted to read information from the wireless tag (T) placed in the communication area (S), based on wireless communication results derived from the first wireless communication device (30), the second wireless communication device (40), and the third wireless communication device; and
the third wireless communication device is provided with antenna (62, 62a to 62c) arranged outside the outer box (21).

13. The wireless tag system (10) according to claim 12, wherein the antenna (62, 62a to 62c) of the third wireless communication device is arranged outside the outer box (21) so as to be located around the opening.

14. The wireless tag system (10) according to claim 13, wherein the antenna (62, 62a to 62c) of the third wireless communication device is arranged being inclined with respect to a plane provided by the opening such that an output direction of transmission waves from the antenna (62, 62a to 62c) of the third wireless communication device is away from the opening.

15. The wireless tag system (10) according to any one of claims 12 to 14, wherein the reading unit is adapted to read information from the wireless tag (T) placed in the communication area (S), based on received signal strength resulting from wireless communication of the first wireless communication device (30), the second wireless communication device (40), and the third wireless communication device.

16. The wireless tag system (10) according to claim 15, wherein wireless communication by the third wireless communication device is performed mutually exclusively with respect to wireless communication of the first wireless communication device (30) and the second wireless communication device (40).

17. The wireless tag system (10) according to any one of claims 1, 10, and 11, wherein the two or more wireless communication devices (30, 40) are adapted to transmit the transmission waves along transmission directions, the transmission directions being either orthogonal to each other or opposed to each other.

18. The wireless tag system (10) according to claim 1, wherein
the transmission waves transmitted by
the first and second wireless devices (30, 40) are configured to be substantially orthogonal to each other or opposed to each other in the communication aera (S).

## Patentansprüche

1. Drahtlos-Etikett-System (10), aufweisend zwei oder mehrere Drahtlos-Kommunikationsvorrichtungen (30, 40), die in der Lage sind, drahtlos mit einem Drahtlos-Etikett (T) zu kommunizieren, das in einem Kommunikationsbereich (S) platziert ist, der physikalisch definiert ist, aufweisend:
einen Kasten (20), der eine Öffnung (22a) aufweist, wobei der Kasten (20) einen äußeren Kasten (21), der ein Hindurchdringen von Funkwellen verhindert, und einen inneren Kasten (22), der in dem äußeren Kasten (21) gehalten ist, aufweist, wobei eine Lücke zwischen sowohl einer inneren Oberfläche (21e, 21 b, 21 c) des äußeren Kastens (21) und einer äußeren Oberfläche (22e, 22b, 22c) des inneren Kastens (22) vorhanden ist, wobei der innere Kasten (22) ein Hindurchdringen der Funkwellen ermöglicht, der Kommunikationsbereich (S) als ein Innenraum des inneren Kastens (22) definiert ist, und das Drahtlos-Etikett (T) in dem Kommunikationsbereich (S) platziert ist; und
zwei oder mehrere Drahtlos-Kommunikationsvorrichtungen (30, 40), die eine erste Drahtlos-Kommunikationsvorrichtung (30) und eine zweite Drahtlos-Kommunikationsvorrichtung (40) beinhalten, wobei die erste Drahtlos-Kommunikationsvorrichtung (30) eine Antenne (32, 32a, 32b) aufweist, die zweite Drahtlos-Kommunikationsvorrichtung (40) eine Antenne (42, 42a, 42b) aufweist, und die Antennen von beiden der ersten und zweiten Drahtlos-Kommunikationsvorrichtungen (30, 40) in der Lücke zwischen den äußeren und inneren Kästen (21, 22) angeordnet sind,
wobei die ersten und zweiten Drahtlos-Kommunikationsvorrichtungen (30, 40) darauf ausgelegt sind, auf jeweils unterschiedlichen Kanälen (23CH, 32CH: S11 in Fig. 15) Funkwellen zu übertragen, die als Übertragungswellen dienen, und darauf ausgelegt sind, gleichzeitig die Übertragungswellen während einer vorgegebenen Zeitspanne oder einer Zeitspanne, die länger ist als die vorgegebene Zeitspanne, in Richtung des Kommunikationsbereichs (S) zu übertragen, wobei die unterschiedlichen Kanäle (23CH, 32CH) in einem Frequenzband durch eine vorgegebene Frequenz oder eine Frequenz, die höher ist als die vorgegebene Frequenz, voneinander getrennt sind, und wobei es keine Interferenz in den Übertragungswellen zwischen unterschiedlichen Kanälen (23CH, 32CH) gibt, wobei die von den zwei oder mehreren Drahtlos-Kommunikationsvorrichtungen (30, 40) in den Kommunikationsbereich (S) übertragenen Übertragungswellen im Wesentlichen gleichzeitig und gegenseitig verstärkt in den Kommunikationsbereich (S) übertragen werden, so dass eine elektrische Leistungszufuhr zu dem Drahtlos-Etikett (T), das in dem Kommunikationsbereich (S) platziert ist, stärker ist als eine außerhalb des Kommunikationsbereichs (S) vorhandene elektrische Leistung; und
wobei das Drahtlos-Etikett (T) darauf ausgelegt ist, gleichzeitig die durch die ersten und zweiten Drahtlos-Kommunikationsvorrichtungen (30, 40) übertragenen Übertragungswellen zu empfangen.

2. Drahtlos-Etikett-System (10) nach Anspruch 1, wobei eine von den ersten und zweiten Drahtlos-Kommunikationsvorrichtungen (30, 40) darauf ausgelegt ist, unmodulierte Wellen als die Übertragungswellen an das Drahtlos-Etikett (T) zu übertragen, um elektrische Leistung zuzuführen.

3. Drahtlos-Etikett-System (10) nach Anspruch 1 oder 2, wobei:
eine von den ersten und zweiten Drahtlos-Kommunikationsvorrichtungen (30, 40) darauf ausgelegt ist, zu jedem Zeitpunkt des Übertragens der Übertragungswellen der anderen der Drahtlos-Kommunikationsvorrichtungen (30, 40) einen Übertragungsbefehl, der sich auf die Übertragung der Übertragungswellen bezieht, zuzuführen; und
die andere der Drahtlos-Kommunikationsvorrichtungen (30, 40) darauf ausgelegt ist, die Drahtlos-Kommunikationsverarbeitung gemäß dem empfangenen Übertragungsbefehl durchzuführen.

4. Drahtlos-Etikett-System (10) nach Anspruch 1 oder 2, wobei:
eine beliebige von den zwei oder mehreren Drahtlos-Kommunikationsvorrichtungen (30, 40) darauf ausgelegt ist, eine Steuertabelle an den Rest der Drahtlos-Kommunikationsvorrichtungen (30, 40) zu übertragen, in der zumindest Kanäle und Übertragungszeiten der Übertragungswellen zeitlich geplant sind; und
der Rest der Drahtlos-Kommunikationsvorrichtungen (30, 40) darauf ausgelegt ist, die Drahtlos-Kommunikationsverarbeitung gemäß der empfangenen Steuertabelle durchzuführen.

5. Drahtlos-Etikett-System (10) nach Anspruch 1 oder 2, wobei:
zumindest eine von den zwei oder mehreren Drahtlos-Kommunikationsvorrichtungen (30, 40) eine Erfassungseinheit beinhalten, die darauf ausgelegt ist, einen Übertragungsstatus der Übertragungswellen bei dem Rest der Drahtlos-Kommunikationsvorrichtungen (30, 40) zu erfassen und gleichzeitig die Übertragungswellen gemäß den Erfassungsergebnissen, die von der Erfassungseinheit bereitgestellt werden, während der vorgegebenen Zeitspanne oder der Zeitspanne, die länger ist als die vorgegebene Zeitspanne, durch die vorgegebene Frequenz oder die Frequenz, die höher ist als die vorgegebene Frequenz, auf dem Kanal zu übertragen, der sich von Kanälen des Rests der Drahtlos-Kommunikationsvorrichtungen (30, 40) unterscheidet und von diesen getrennt ist, wenn die Drahtlos-Kommunikationsverarbeitung durchgeführt wird.

6. Drahtlos-Etikett-System (10) nach Anspruch 1 oder 2, wobei
das System eine Steuervorrichtung (50) aufweist, die darauf ausgelegt ist, einen Übertragungsbefehl bereitzustellen, der sich auf die Übertragung der Übertragungswellen an die ersten und zweiten Drahtlos-Kommunikationsvorrichtungen (30, 40) bezieht; und
die zwei oder mehreren Drahtlos-Kommunikationsvorrichtungen (30, 40) darauf ausgelegt sind, die Drahtlos-Kommunikationsverarbeitung gemäß dem von der Steuervorrichtung (50) empfangenen Übertragungsbefehl durchzuführen.

7. Drahtlos-Etikett-System (10) nach Anspruch 1 oder 2, wobei
das System eine Steuervorrichtung (50) aufweist, die darauf ausgelegt ist, eine Steuertabelle an die zwei oder mehreren Drahtlos-Kommunikationsvorrichtungen (30, 40) zu übertragen, in der zumindest Kanäle und Übertragungszeiten der Übertragungswellen zeitlich geplant sind; und
die ersten und zweiten Drahtlos-Kommunikationsvorrichtungen (30, 40) darauf ausgelegt sind, die Drahtlos-Kommunikationsverarbeitung gemäß der von der Steuervorrichtung (50) empfangenen Steuertabelle durchzuführen.

8. Drahtlos-Etikett-System (10) nach Anspruch 1, wobei
der äußere Kasten (21) als seine Innenoberfläche eine rechteckige Innenbodenfläche, die der Öffnung zugewandt ist, sowie vier Innenseitenflächen, die jeweils mit vier Seiten der Innenbodenfläche verbunden sind, beinhaltet; und
die Antenne (32, 32a, 32b) der ersten Drahtlos-Kommunikationsvorrichtung (30) zwischen der Innenbodenfläche und einer Außenfläche des inneren Kastens (22) angeordnet ist, und die Antenne (42, 42a, 42b) der zweiten Drahtlos-Kommunikationsvorrichtung (40) zwischen einer beliebigen der vier Innenseitenflächen und einer Außenfläche des inneren Kastens (22) angeordnet ist.

9. Drahtlos-Etikett-System (10) nach Anspruch 8, wobei die Antenne (42, 42a, 42b) der zweiten Drahtlos-Kommunikationsvorrichtung (40) im Hinblick auf die Innenseitenfläche geschrägt angeordnet ist, so dass eine Ausgangsrichtung der Übertragungswellen von der Öffnung weg zeigt.

10. Drahtlos-Etikett-System (10) nach Anspruch 1, wobei
der äußere Kasten (21) als seine Innenfläche eine rechteckige Innenbodenfläche, die der Öffnung zugewandt ist, sowie vier Innenseitenflächen, die jeweils mit vier Seiten der Innenbodenfläche verbunden sind, beinhaltet;
die erste Drahtlos-Kommunikationsvorrichtung (30) und die zweite Drahtlos-Kommunikationsvorrichtung (40) jeweils zwei Antennen als erste und zweite Antennen (32a, 32b, 42a, 42b) beinhalten;
die Antenne (32) der ersten Drahtlos-Kommunikationsvorrichtung (30) aus zwei Antennen (32a, 32b) besteht und die Antenne (42) der zweiten Drahtlos-Kommunikationsvorrichtung (40) aus zwei Antennen (42a, 42b) besteht, wobei die vier Antennen (32a, 32b, 42a, 42b) der ersten und zweiten Drahtlos-Kommunikationsvorrichtungen (30, 40) in der Lücke zwischen den äußeren und inneren Kästen (21, 22) angeordnet sind, so dass eine erste Antenne (32a, 32b) der ersten Drahtlos-Kommunikationsvorrichtung (30) einer ersten Antenne (42a, 42b) der zweiten Drahtlos-Kommunikationsvorrichtung (40) zugewandt ist und eine zweite Antenne (32a, 32b) der ersten Drahtlos-Kommunikationsvorrichtung (30) einer zweiten Antenne (42a, 42b) der zweiten Drahtlos-Kommunikationsvorrichtung (40) zugewandt ist; und
die erste Drahtlos-Kommunikationsvorrichtung (30) und die zweite Drahtlos-Kommunikationsvorrichtung (40) darauf ausgelegt sind, gleichzeitig die Drahtlos-Kommunikationsverarbeitung während der vorgegebenen Zeitspanne oder der Zeitspanne, die länger ist als die vorgegebene Zeitspanne, auf den unterschiedlichen Kanälen (23CH, 32CH) durchzuführen, die trennen, auf welchem die Übertragungswellen von der ersten Antenne (32a, 32b) der ersten Drahtlos-Kommunikationsvorrichtung (30) und von der ersten Antenne (42a, 42b) der zweiten Drahtlos-Kommunikationsvorrichtung (40) übertragen werden, wobei die unterschiedlichen Kanäle (23CH, 32CH) voneinander durch eine vorgegebene Kanalnummer oder eine Kanalnummer, die größer ist als die vorgegebene Kanalnummer, getrennt sind, oder auch gleichzeitig die Drahtlos-Kommunikationsverarbeitung während der vorgegebenen Zeitspanne oder der Zeitspanne, die länger ist als die vorgegebene Zeitspanne, auf den unterschiedlichen Kanälen (23CH, 32CH) durchführen, auf welchen die getrennten Übertragungswellen von der zweiten Antenne (32a, 32b) der ersten Drahtlos-Kommunikationsvorrichtung (30) und von der zweiten Antenne (42a, 42b) der zweiten Drahtlos-Kommunikationsvorrichtung (40) übertragen werden, wobei die unterschiedlichen Kanäle (23CH, 32CH) voneinander durch die vorgegebene Kanalnummer oder die Kanalnummer, die größer ist als die vorgegebene Kanalnummer, getrennt sind.

11. Drahtlos-Etikett-System (10) nach Anspruch 1, wobei
der äußere Kasten (21) als die Innenfläche desselben eine rechteckige Innenbodenfläche, die der Öffnung zugewandt ist, und vier Innenseitenflächen, die jeweils mit vier Seiten der Innenbodenfläche verbunden sind, beinhaltet;
die erste Drahtlos-Kommunikationsvorrichtung (30) und die zweite Drahtlos-Kommunikationsvorrichtung (40) jeweils zwei Antennen als erste und zweite Antennen (32a, 32b, 42a, 42b) beinhalten;
die Antenne (32) der ersten Drahtlos-Kommunikationsvorrichtung (30) aus zwei Antennen (32a, 32b) besteht und die Antenne (42) der zweiten Drahtlos-Kommunikationsvorrichtung (40) aus zwei Antennen (42a, 42b) besteht, wobei die vier Antennen (32a, 32b, 42a, 42b) der ersten und zweiten Drahtlos-Kommunikationsvorrichtungen (30, 40) in der Lücke zwischen den äußeren und inneren Kästen (21, 22) angeordnet sind, so dass eine erste Antenne (32a, 32b) und eine zweite Antenne (32a, 32b) der ersten Drahtlos-Kommunikationsvorrichtung einander zugewandt sind, und eine erste Antenne (42a, 42b) und eine zweite Antenne (42a, 42b) der zweiten Drahtlos-Kommunikationsvorrichtung einander zugewandt sind; und
die erste Drahtlos-Kommunikationsvorrichtung (30) und die zweite Drahtlos-Kommunikationsvorrichtung (40) darauf ausgelegt sind, gleichzeitig die Drahtlos-Kommunikationsverarbeitung während der vorgegebenen Zeitspanne oder der Zeitspanne, die länger ist als die vorgegebene Zeitspanne, auf den unterschiedlichen Kanälen (23CH, 32CH) durchzuführen, auf welchen die getrennten Übertragungswellen von der ersten Antenne (32a, 32b) der ersten Drahtlos-Kommunikationsvorrichtung (30) und von der ersten Antenne (42a, 42b) der zweiten Drahtlos-Kommunikationsvorrichtung (40) übertragen werden, wobei die unterschiedlichen Kanäle (23CH, 32CH) voneinander durch eine vorgegebene Kanalnummer oder eine Kanalnummer, die größer ist als die vorgegebene Kanalnummer, getrennt sind, oder auch gleichzeitig die Drahtlos-Kommunikationsverarbeitung während der vorgegebenen Zeitspanne oder der Zeitspanne, die länger ist als die vorgegebene Zeitspanne, auf den unterschiedlichen Kanälen (23CH, 32CH) durchführen, auf welchen die getrennten Übertragungswellen von der zweiten Antenne (32a, 32b) der ersten Drahtlos-Kommunikationsvorrichtung (30) und von der zweiten Antenne (42a, 42b) der zweiten Drahtlos-Kommunikationsvorrichtung (40) übertragen werden, wobei die unterschiedlichen Kanäle (23CH, 32CH) voneinander durch die vorgegebene Kanalnummer oder die Kanalnummer, die größer ist als die vorgegebene Kanalnummer, getrennt sind.

12. Drahtlos-Etikett-System (10) nach Anspruch 1, wobei
die zwei oder mehreren Drahtlos-Kommunikationsvorrichtungen (30, 40) eine dritte Drahtlos-Kommunikationsvorrichtung zusätzlich zu der ersten Drahtlos-Kommunikationsvorrichtung (30) und der zweiten Drahtlos-Kommunikationsvorrichtung (40) beinhalten;
das System eine Leseeinheit beinhaltet, die darauf ausgelegt ist, Informationen von dem Drahtlos-Etikett (T), das in dem Kommunikationsbereich (S) platziert ist, auf Basis von Drahtlos-Kommunikationsergebnissen, die von der ersten Drahtlos-Kommunikationsvorrichtung (30), der zweiten Drahtlos-Kommunikationsvorrichtung (40) und der dritten Drahtlos-Kommunikationsvorrichtung erhalten werden, auszulesen; und
die dritte Drahtlos-Kommunikationsvorrichtung mit einer Antenne (62, 62a bis 62c) versehen ist, die außerhalb des äußeren Kastens (21) angeordnet ist.

13. Drahtlos-Etikett-System (10) nach Anspruch 12, wobei die Antenne (62, 62a bis 62c) der dritten Drahtlos-Kommunikationsvorrichtung außerhalb des äußeren Kastens (21) angeordnet ist, so dass sie sich um die Öffnung herum befindet.

14. Drahtlos-Etikett-System (10) nach Anspruch 13, wobei die Antenne (62, 62a bis 62c) der dritten Drahtlos-Kommunikationsvorrichtung so angeordnet ist, dass sie im Hinblick auf eine Ebene, die von der Öffnung dargestellt wird, geschrägt angeordnet ist, so dass eine Ausgangsrichtung der Übertragungswellen von der Antenne (62, 62a bis 62c) der dritten Drahtlos-Kommunikationsvorrichtung weg von der Öffnung gegeben ist.

15. Drahtlos-Etikett-System (10) nach einem der Ansprüche 12 bis 14, wobei die Leseeinheit darauf ausgelegt ist, Informationen aus dem Drahtlos-Etikett (T), das in dem Kommunikationsbereich (S) platziert ist, auf Basis einer empfangenen Signalstärke, die von der Drahtlos-Kommunikation der ersten Drahtlos-Kommunikationsvorrichtung (30), der zweiten Drahtlos-Kommunikationsvorrichtung (40) und der dritten Drahtlos-Kommunikationsvorrichtung herrührt, auszulesen.

16. Drahtlos-Etikett-System (10) nach Anspruch 15, wobei die Drahtlos-Kommunikation der dritten Drahtlos-Kommunikationsvorrichtung auf eine im Hinblick auf die Drahtlos-Kommunikation der ersten Drahtlos-Kommunikationsvorrichtung (30) und der zweiten Drahtlos-Kommunikationsvorrichtung (40) gegenseitig ausschließende Weise durchgeführt wird.

17. Drahtlos-Etikett-System (10) nach einem der Ansprüche 1, 10 und 11, wobei die zwei oder mehreren Drahtlos-Kommunikationsvorrichtungen (30, 40) darauf ausgelegt sind, die Übertragungswellen entlang Übertragungsrichtungen zu übertragen, wobei die Übertragungsrichtungen entweder rechtwinklig zueinander oder einander entgegengesetzt sind.

18. Drahtlos-Etikett-System (10) nach Anspruch 1, wobei die durch die ersten und zweiten Drahtlos-Vorrichtungen (30, 40) übertragenen Übertragungswellen so konfiguriert sind, dass sie in dem Kommunikationsbereich (S) im Wesentlichen rechtwinklig zueinander oder einander entgegengesetzt sind.

## Revendications

1. Système de tag sans fil (10) comprenant deux ou plusieurs dispositifs de communication sans fil (30, 40) capables de communiquer sans fil avec un tag sans fil (T) placée dans une zone de communication (S) physiquement définie, comprenant :
une boîte (20) présentant une ouverture (22a), la boîte (20) comprenant une boîte extérieure (21) empêchant le passage des ondes radio à travers elle et une boîte intérieure (22) maintenue dans la boîte extérieure (21) avec un espace laissé entre une surface intérieure (21e, 21b, 21c) de la boîte extérieure (21) et une surface extérieure (22e, 22b, 22c) de la boîte intérieure (22), la boîte intérieure (22) permettant le passage des ondes radio à travers elle, la zone de communication (S) étant définie comme un espace interne de la boîte intérieure (22), le tag sans fil (T) étant placée dans la zone de communication (S) ; et
deux ou plusieurs dispositifs de communication sans fil (30, 40) comprenant un premier dispositif de communication sans fil (30) et un second dispositif de communication sans fil (40), le premier dispositif de communication sans fil (30) ayant une antenne (32, 32a, 32b), le second dispositif de communication sans fil (40) ayant une antenne (42, 42a, 42b), les antennes du premier et du second dispositifs de communication sans fil (30, 40) étant disposées dans l'espace entre les boîtes extérieure et intérieure (21, 22),
dans lequel les premier et second dispositifs de communication sans fil (30, 40) sont adaptés pour transmettre des ondes radio, servant d'ondes de transmission, sur des canaux mutuellement différents (23CH, 32CH : S11 sur la Fig. 15) et adaptés pour transmettre simultanément les ondes de transmission vers la zone de communication (S) pendant une période prédéterminée ou une période plus longue que la période prédéterminée, les différents canaux (23CH, 32CH) étant séparés les uns des autres dans une bande de fréquence par une fréquence prédéterminée ou une fréquence supérieure à la fréquence prédéterminée et n'ayant pas d'interférence dans les ondes de transmission entre les différents canaux (23CH, 32CH), les ondes de transmission transmises par les deux dispositifs de communication sans fil ou plus (30, 40) étant transmises dans la zone de communication (S) de manière sensiblement simultanée et mutuellement intensifiées dans la zone de communication (S) de sorte que l'alimentation électrique du tag sans fil (T) placée dans la zone de communication (S) soit plus forte que l'alimentation électrique fournie en dehors de la zone de communication (S) ; et
le tag sans fil (T) est adapté pour recevoir simultanément les ondes de transmission émises par les premier et second dispositifs de communication sans fil (30, 40).

2. Le système de tag sans fil (10) selon la revendication 1, dans lequel l'un des premiers et seconds dispositifs de communication sans fil (30, 40) est adapté pour transmettre des ondes non modulées en tant qu'ondes de transmission au tag sans fil (T) pour fournir de l'énergie électrique.

3. Le système de tag sans fil (10) selon la revendication 1 ou 2, dans lequel
l'un des premier et deuxième dispositifs de communication sans fil (30, 40) est adapté pour fournir une instruction de transmission relative à la transmission des ondes de transmission à l'autre dispositif de communication sans fil (30, 40) à chaque moment de la transmission des ondes de transmission ; et
l'autre dispositif de communication sans fil (30, 40) est adapté pour effectuer le traitement de communication sans fil en fonction de l'instruction de transmission reçue.

4. Le système de tag sans fil (10) selon la revendication 1 ou 2, dans lequel
l'un des deux dispositifs de communication sans fil ou plus (30, 40) est adapté pour transmettre au reste des dispositifs de communication sans fil (30, 40) un tableau de commande dans lequel au moins les canaux et les heures de transmission des ondes de transmission sont programmés dans le temps ; et
le reste des dispositifs de communication sans fil (30, 40) est adapté pour effectuer le traitement de la communication sans fil en fonction du tableau de commande reçu.

5. Le système de tag sans fil (10) selon la revendication 1 ou 2, dans lequel
au moins un des deux dispositifs de communication sans fil ou plus (30, 40) comprend une unité de détection adaptée pour détecter un état de transmission des ondes de transmission dans le reste des dispositifs de communication sans fil (30, 40), et transmettre simultanément les ondes de transmission selon les résultats de détection dérivés de l'unité de détection, pendant la période de temps prédéterminée ou la période de temps plus longue que la période de temps prédéterminée sur le canal différent et séparé des canaux du reste des dispositifs de communication sans fil (30, 40) par la fréquence prédéterminée ou la fréquence supérieure à la fréquence prédéterminée, lors de l'exécution du traitement de la communication sans fil.

6. Le système de tag sans fil (10) selon la revendication 1 ou 2, dans lequel
le système comprend un dispositif de commande (50) adapté pour fournir une instruction de transmission relative à la transmission des ondes de transmission aux premier et deuxième dispositifs de communication sans fil (30, 40) ; et
les deux dispositifs de communication sans fil ou plus (30, 40) sont adaptés pour effectuer le traitement de communication sans fil en fonction de l'instruction de transmission reçue du dispositif de commande (50).

7. Le système de tag sans fil (10) selon la revendication 1 ou 2, dans lequel
le système comprend un dispositif de commande (50) adapté pour transmettre un tableau de commande, dans lequel au moins les canaux et les heures de transmission des ondes de transmission sont programmés, aux deux dispositifs de communication sans fil ou plus (30, 40) ; et
les premier et second dispositifs de communication sans fil (30, 40) sont adaptés pour effectuer le traitement de la communication sans fil en fonction du tableau de commande reçu du dispositif de commande (50).

8. Le système de tag sans fil (10) selon la revendication 1, dans lequel
le boîtier extérieur (21) comprend, en tant que surface intérieure, une surface de fond intérieure rectangulaire faisant face à l'ouverture, et quatre surfaces latérales intérieures respectivement reliées aux quatre côtés de la surface de fond intérieure ; et
l'antenne (32, 32a, 32b) du premier dispositif de communication sans fil (30) est disposée entre la surface intérieure inférieure et une surface extérieure de la boîte intérieure (22), et l'antenne (42, 42a, 42b) du second dispositif de communication sans fil (40) est disposée entre l'une des quatre surfaces latérales intérieures et une surface extérieure de la boîte intérieure (22).

9. Le système de tag sans fil (10) selon la revendication 8, dans lequel l'antenne (42, 42a, 42b) du second dispositif de communication sans fil (40) est inclinée par rapport à la surface latérale intérieure de sorte qu'une direction de sortie des ondes de transmission s'éloigne de l'ouverture.

10. Le système de tag sans fil (10) selon la revendication 1, dans lequel
le boîtier extérieur (21) comprend, en tant que surface intérieure, une surface inférieure intérieure rectangulaire faisant face à l'ouverture, et quatre surfaces latérales intérieures respectivement reliées aux quatre côtés de la surface inférieure intérieure ;
le premier dispositif de communication sans fil (30) et le second dispositif de communication sans fil (40) comprennent chacun deux antennes en tant que première et seconde antennes (32a, 32b, 42a, 42b) ;
l'antenne (32) du premier dispositif de communication sans fil (30) est composée de deux antennes (32a, 32b) et l'antenne (42) du second dispositif de communication sans fil (40) est composée de deux antennes (42a, 42b), dans lequel
les quatre antennes (32a, 32b, 42a, 42b) des premier et deuxième dispositifs de communication sans fil (30, 40) sont disposées dans l'espace entre les boîtiers extérieur et intérieur (21, 22) de telle sorte qu'une première antenne (32a, 32b) du premier dispositif de communication sans fil (30) fait face à une première antenne (42a, 42b) du deuxième dispositif de communication sans fil (40) et qu'une deuxième antenne (32a, 32b) du premier dispositif de communication sans fil (30) fait face à une deuxième antenne (42a, 42b) du deuxième dispositif de communication sans fil (40) ; et
le premier dispositif de communication sans fil (30) et le second dispositif de communication sans fil (40) sont adaptés pour effectuer simultanément le traitement de communication sans fil pendant la période de temps prédéterminée ou la période de temps plus longue que la période de temps prédéterminée sur les différents canaux (23CH, 32CH) qui se séparent lorsque les ondes de transmission sont émises par la première antenne (32a, 32b) du premier dispositif de communication sans fil (30) et par la première antenne (42a, 42b) du second dispositif de communication sans fil (40), les différents canaux (23CH, 32CH) étant séparés les uns des autres par un numéro de canal prédéterminé ou par un numéro de canal plus grand que le numéro de canal prédéterminé, soit effectuer simultanément le traitement de communication sans fil pendant la période de temps prédéterminée ou la période de temps supérieure à la période de temps prédéterminée sur les différents canaux (23CH, 32CH) sur lesquels les ondes de transmission séparées sont transmises à partir de la deuxième antenne (32a, 32b) du premier dispositif de communication sans fil (30) et à partir de la deuxième antenne (42a, 42b) du deuxième dispositif de communication sans fil (40), les différents canaux (23CH, 32CH) étant séparés les uns des autres par le numéro de canal prédéterminé ou le numéro de canal supérieur au numéro de canal prédéterminé.

11. Le système de tag sans fil (10) selon la revendication 1, dans lequel
le boîtier extérieur (21) comprend, en tant que surface intérieure, une surface inférieure intérieure rectangulaire faisant face à l'ouverture, et quatre surfaces latérales intérieures respectivement reliées aux quatre côtés de la surface inférieure intérieure ;
le premier dispositif de communication sans fil (30) et le second dispositif de communication sans fil (40) comprennent chacun deux antennes en tant que première et seconde antennes (32a, 32b, 42a, 42b) ;
l'antenne (32) du premier dispositif de communication sans fil (30) est composée de deux antennes (32a, 32b) et l'antenne (42) du second dispositif de communication sans fil (40) est composée de deux antennes (42a, 42b), les quatre antennes (32a, 32b, 42a, 42b) des premier et second dispositifs de communication sans fil (30, 32b, 42a, 42b) étant disposées dans l'espace entre le premier et le second dispositif de communication sans fil (30, 32b, 42a, 42b), 40) sont disposées dans l'espace entre les boîtiers extérieur et intérieur (21, 22) de telle sorte qu'une première antenne (32a, 32b) et une deuxième antenne (32a, 32b) de la première communication sans fil se font face, et qu'une première antenne (42a, 42b) et une deuxième antenne (42a, 42b) de la deuxième communication sans fil se font face ; et
le premier dispositif de communication sans fil (30) et le second dispositif de communication sans fil (40) sont adaptés pour effectuer simultanément le traitement de communication sans fil pendant la période de temps prédéterminée ou la période de temps plus longue que la période de temps prédéterminée sur les différents canaux (23CH, 32CH) sur lesquels les ondes de transmission distinctes sont émises par la première antenne (32a, 32b) du premier dispositif de communication sans fil (30) et par la première antenne (42a, 42b) du second dispositif de communication sans fil (40), les différents canaux (23CH, 32CH) étant séparés les uns des autres par un numéro de canal prédéterminé ou un numéro de canal plus grand que le numéro de canal prédéterminé, soit effectuer simultanément le traitement de communication sans fil pendant la période de temps prédéterminée ou la période de temps supérieure à la période de temps prédéterminée sur les différents canaux (23CH, 32CH) sur lesquels les ondes de transmission séparées sont transmises par la seconde antenne (32a, 32b) du premier dispositif de communication sans fil (30) et la seconde antenne (42a, 42b) du second dispositif de communication sans fil (40), les différents canaux (23CH, 32CH) étant séparés les uns des autres par le numéro de canal prédéterminé ou le numéro de canal plus grand que le numéro de canal prédéterminé.

12. Le système de tag sans fil (10) selon la revendication 1, dans lequel
les deux dispositifs de communication sans fil ou plus (30, 40) comprennent un troisième dispositif de communication sans fil en plus du premier dispositif de communication sans fil (30) et du deuxième dispositif de communication sans fil (40) ;
le système comprend une unité de lecture adaptée pour lire les informations du tag sans fil (T) placée dans la zone de communication (S), sur la base des résultats de la communication sans fil provenant du premier dispositif de communication sans fil (30), du deuxième dispositif de communication sans fil (40) et du troisième dispositif de communication sans fil ; et
le troisième dispositif de communication sans fil est équipé d'une antenne (62, 62a à 62c) disposée à l'extérieur du boîtier extérieur (21).

13. Le système de tag sans fil (10) selon la revendication 12, dans lequel l'antenne (62, 62a à 62c) du troisième dispositif de communication sans fil est disposée à l'extérieur de la boîte extérieure (21) de manière à être située autour de l'ouverture.

14. Le système de tag sans fil (10) selon la revendication 13, dans lequel l'antenne (62, 62a à 62c) du troisième dispositif de communication sans fil est inclinée par rapport à un plan fourni par l'ouverture de sorte qu'une direction de sortie des ondes de transmission de l'antenne (62, 62a à 62c) du troisième dispositif de communication sans fil s'éloigne de l'ouverture.

15. Le système de tag sans fil (10) selon l'une des revendications 12 à 14, dans lequel l'unité de lecture est adaptée pour lire les informations du tag sans fil (T) placée dans la zone de communication (S), sur la base de la force du signal reçu résultant de la communication sans fil du premier dispositif de communication sans fil (30), du deuxième dispositif de communication sans fil (40) et du troisième dispositif de communication sans fil.

16. Le système de tag sans fil (10) selon la revendication 15, dans lequel la communication sans fil par le troisième dispositif de communication sans fil est effectuée de manière mutuellement exclusive par rapport à la communication sans fil du premier dispositif de communication sans fil (30) et du deuxième dispositif de communication sans fil (40).

17. Le système de tag sans fil (10) selon l'une des revendications 1, 10 et 11, dans lequel les deux dispositifs de communication sans fil ou plus (30, 40) sont adaptés pour transmettre les ondes de transmission le long de directions de transmission, les directions de transmission étant soit orthogonales les unes aux autres, soit opposées les unes aux autres.

18. Le système de tag sans fil (10) selon la revendication 1, dans lequel les ondes de transmission transmises par le premier et le second dispositif sans fil (30, 40) sont configurées pour être sensiblement orthogonales l'une à l'autre ou opposées l'une à l'autre dans la zone de communication (S).
